# EUROPEAN PATENT APPLICATION

(11) **EP 0 762 333 A1**
(43) Date of publication of application: **12.03.1997**
(21) Application number: 96305919.1
(22) Date of filing: 13.08.1996
(51) Int. Cl.: G07B 15/00

(54) **Method and system for calculating a user account balance in a recognition system**

(30) Priority: 14.08.1995 US 2264
(71) Applicant: TEXAS INSTRUMENTS INCORPORATED, Dallas, Texas 75243 (US)
(72) Inventor: Hurta, Dwaine S., Garland, Texas 75042 (US); Frazee, Francis B., Plano, Texas 74075 (US)
(74) Representative: Holt, Michael

(57) **Abstract**

A system and method in which a transponder (14) is operable to transmit an original user account balance to an interrogator (12), which in turn calculates a revised user account balance and transmits the revised user account balance to the transponder (14). In one embodiment of the invention, the transponder (14) is further operable to transmit a verification user account balance back to the interrogator (12), which then compares verification user account balance to the revised user account balance that was earlier calculated and stored in an interrogator memory.

## Description

### FIELD OF THE INVENTION

This invention generally relates to recognition systems of the type which include an interrogator and a transponder, and more particularly to such a system in which the interrogator transmits n interrogation signal to the transponder in response to which the interrogator transmits back to the interrogator a response signal. The invention further generally relates to improved methods of communicating between the interrogator and the transponder. In specific embodiments , the invention relates to an Automatic Vehicle identification (AVI) type of recognition system.

### BACKGROUND OF THE INVENTION

The invention will be described in the context of an Automatic Vehicle Identification (AVI) system capable of exchanging data codes between an interrogator and a transponder. The AVI field is but one environment in which the inventive concepts described herein can be applied. Systems using batteryless transponders or transponders with batteries may be used for identifying or locating objects bearing the transponders such as cattle, luggage or other items. Further, a transponder might provide status information regarding the object on which it is located, such as a transponder borne on a car door indicating whether that car door is open. Transponders utilized in the above recognition systems or others may be powered from batteries or from wireless radio frequency (RF) signals.

With respect to AVI systems, generally, the interrogator is provided in a toll booth of a toll road, parking garage or other limited access facility. The interrogator (reader) identifies passing automobiles by sending wireless interrogation signals to a transponder (tag), which would normally be a small, self-contained unit placed, for example, on the dashboard or windshield of the car. In this way the car (or other vehicle or object) can be identified in a speedy and efficient manner. Depending on the use of the system, an account associated with the driver, owner, or other designated person can be debited with an access charge. Compatibility standards for one such AVI system is set out in Title 21, Division 2, Chapter 16, Articles 1-4 of the California Code of Regulations, herein known as the Caltrans specification or Caltrans spec. The AVI equipment for toll collection will typically consist of two functional elements: vehicle-mounted transponders and fixed-position interrogators.

Because the transponders typically either derive their operating power from a small battery, or from a received RF signal, the transponders are not normally active. The interrogator will transmit an RF trigger pulse to activate (turn-on) the transponders in approaching cars or other objects. The interrogator may transmit a number of RF trigger pulses at regular intervals to wake up any approaching transponders. Alternatively, the interrogator might send an RF trigger pulse in response to an external stimulus to the interrogator indicating that a transponder is approaching (e.g. light, heat, or magnetic sensors). After a time delay, the reader then will transmit an encoded signal, referred to as the Polling message or interrogation which, upon detection and decoding by the transponder, will provide initial information to the transponder as to which data blocks the transponder should transit.

In the field of recognition systems, a user account balance is typically maintained in a user credit account or a user debit account. Typically, each time a user (or user vehicle) bearing a transponder enters a toll collection site, the user's account balance will be debited. Prior art systems such as U.S. Pat. 4,303,904 to Chasek and U.S. Pat. 5,086,389 to Hassett et al. store the user account balance in the transponder and revise the user account balances within the transponder by sending the transponder a message to debit the account. This method poses several difficulties. For example, such a method requires that the transponder possess processing capabilities, and that the equations for calculating new balances be programmed into the transponder prior to use. Other prior art systems maintain the user account balances in centralized databases, often remote from the interrogator. In such prior art systems as these, a master computer calculates balances for the entire toll system or for large portions of the toll system. The interrogator in such a system must identify the vehicle and send a transponder identification number to the master computer. The master computer must then debit the user's account or otherwise verify that the user has a sufficient balance or credit. Only after this substantial verification delay can the master computer notify the interrogator or other toll plaza computer to allow the vehicle to pass. Such a system places heavy demand on the master computer. Furthermore, communication delays must be small enough to ensure that the transponder is programmed while it is within range. Such a system would be highly vulnerable to breakdowns or degradation of the communication system. If the system were too slow, the desirable end of speedy approval of the vehicle's passage (at speeds ideally close to normal traffic) must be foregone.

### SUMMARY OF THE INVENTION

Disclosed is a system and method for calculating a user account balance in an RF-ID system comprising a transponder and an interrogator. The account balance is stored on the transponder and changes to the account balance are calculated in the interrogator. In a described embodiment, the transponder transmits the original user account balance, transponder identification number, and a "vehicle entry point" stored in the transponder corresponding to the location at which the transponder entered the toll system. The interrogator receives this information and computes a revised account balance using, for example, the original user account balance, the entry point or other distance information stored or calculated in the transponder, and toll information and/or balance equations stored in the interrogator for determining the amount of the toll to be subtracted from the original user account balance. Other exemplary factors to be used in calculating the revised balance would be whether the user/vehicle belongs within some special category such as public servant, senior citizen, or car pool participant. The interrogator then transmits the revised user account balance to the transponder. If desired, the transponder may then retransmit the revised user account balance back to the interrogator as a verification of the integrity of the data transmission. If the revised user account balance transmitted from the transponder does not match the revised user account balance as computed by the interrogator, further steps may be taken to effect an uncorrupted data transfer. Generally, the user account balance would also be computed for billing purposes by a separate computer that would not be in the user's control (e.g., a mainframe computer in communication with the interrogator). If the account balance stored in the transponder did not match that stored in the mainframe computer, an error protocol might be instituted. Such an error protocol, for example, might override the value stored in the transponder.

The advantages appreciated by this system and method include potentially less complex transponder circuitry since the transponder does not need computing circuitry to calculate revised account balances. The embodiments described herein possess the advantage of increased flexibility in that changes to the equations and methods of calculating revised account balances can be made in relatively fewer interrogators in the possession of toll facility operators than in the transponders disbursed amongst the population of users. Changing equations for calculation of revised account balances in the prior art systems might require a recall of transponders or might require that interrogators perform updates or maintenance of transponders when those transponders came into communication with the interrogators. Further, an expedient calculation of the user account balance can be made relative to a system in which the calculation is made in a "host" computer that is in communication with the interrogator. This method and system for allow for autonomous operation of the interrogator. The interrogator will preferably have the appropriate toll values and equations for calculating revised user account balances stored in a memory therein. Periodically, data from the interrogator might be retrieved and processed in a central business office for the toll facility operator, but the timing and specifics of such data retrieval would lie within the toll facility operator's discretion.

In the preferred embodiment of the present invention within a vehicle travelling on a vehicle lane is a transponder. The transponder receives the interrogation signal from the transmitter of the interrogator and can reply to the interrogator by backscatter modulating a continuous wave input from the interrogator or another source. A receiver of the interrogator then decodes the backscatter modulated signal and may relay the information contained in this signal to a control circuit which, for example, might log the information into a memory. A number of transponders can be polled separately by interrogators associated with each vehicle lane.

The principles described in connection with this invention can be applied to non-AVI systems as well as AVI systems. For example, the toll calculation methods described herein could be used with the inventions of commonly assigned U.S. Patent No. 5,053,774, U.S. Patent Appl. No. 08/021,123, and U.S. Patent Appl. No. 08/233,839.

### BRIEF DESCRIPTION OF THE DRAWINGS

In the drawings:
Figure 1 is a block circuit diagram of an interrogator and transponder arrangement according to the present invention;
Figure 2 is a generalized side elevation of a typical installation of an Automatic Vehicle Identification (AVI) System in accordance with Figure 1;
Figure 3 is a generalized top view of three adjacent traffic lanes using the AVI System of Figure 1, the figure including a depiction of the timing sequence of a trigger pulse and interrogation signal from the interrogator to the transponder;
Figure 4 is a block circuit diagram of the transponder and interrogator arrangement usable in the systems of Figures 1-3;
Figure 5 is a more detailed block circuit diagram of the transponder of Figure 4, depicting a modulation detector, a highpass filter, and a wake-up block;
Figure 6 is an even more detailed block circuit diagram of the elements of Figure 5, including the modulation detector, the highpass filter and the wake-up block;
Figure 7 is a timing diagram showing the signals at labeled nodes of the transponder as shown in Figures 5-6;
Figure 8 is a block circuit diagram showing the interconnection of various function blocks of the Application Specific Integrated Circuit (ASIC) of Figure 5;
Figure 9 is a block circuit diagram of a receive buffer block preferably within the digital Application Specific Integrated Circuit (ASIC) of Figure 8 for receiving signal "A" from the modulation detector;
Figure 10 is a block diagram of the lane discriminator block preferably within the digital ASIC of Figure 8;
Figure 11 is a block diagram of the main controller block preferably within the digital ASIC of Figure 8;
Figure 12 is a block diagram of the main memory block preferably within the digital ASIC of Figure 8;
Figure 13 is a block diagram of the transmit block preferably within the digital ASIC of Figure 8;
Figure 14 is a block diagram of the external interface block preferably within the digital ASIC of Figure 8;
Figure 15 is a block diagram of the buzzer block preferably within the digital ASIC of Figure 8;
Figure 16 is a block diagram of the oscillator block preferably within the digital ASIC of Figure 8;
Figure 17 is a block circuit diagram of an interrogator usable in the transponder and interrogator arrangements of Figures 1-3 wherein the interrogator is capable of sending a low frequency modulation signal to activate the transponder according to the present invention;
Figure 18 illustrate waveform graphs for two different embodiments of "squitter" modulation by which low frequency signalling from the interrogator of Figures 1-4 can be superimposed upon an RF interrogation signal;
Figure 19 is a block circuit diagram of a transponder which also includes an RF threshold detector; and
Figure 20 is a representation of the time sequence and location of the calculation of user account balances for an embodiment according to the present invention.

Corresponding numerals and symbols in the different figures refer to corresponding parts unless otherwise indicated.

### DETAILED DESCRIPTION

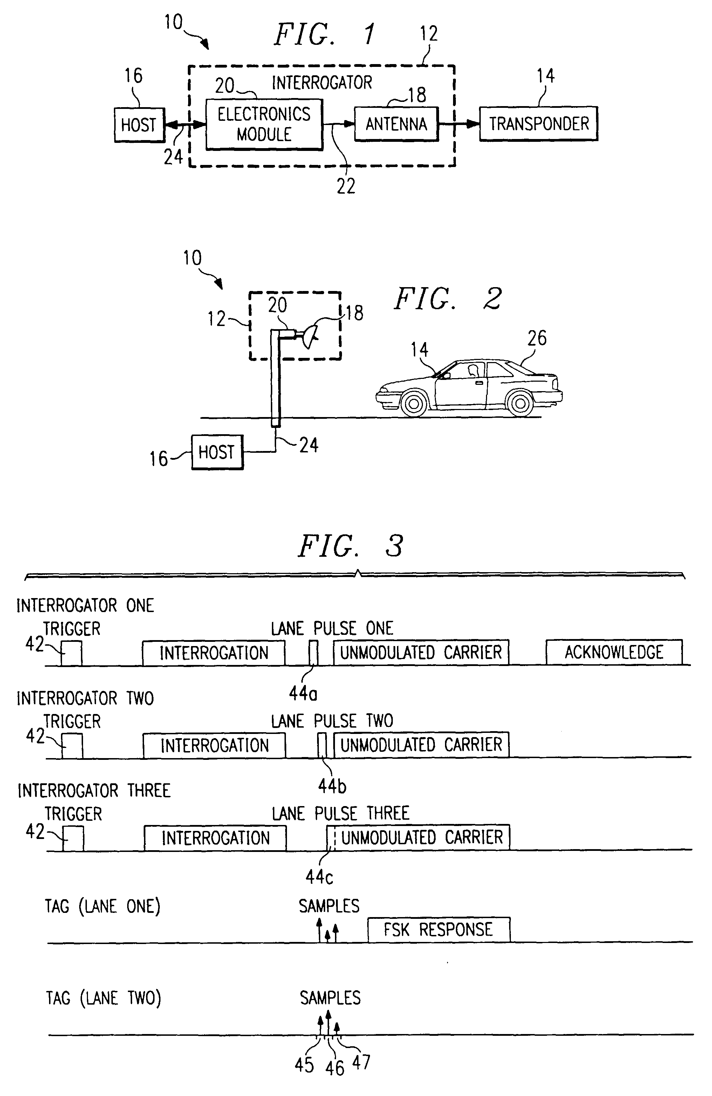

Figure 1 shows a block diagram of an AVI system **10** in which an interrogator **12** communicates with a remote transponder **14** by transmitting an interrogation signal to the transponder **14** in response to which the interrogator **12** transmits back to the interrogator **12** a response signal **15b** containing a transponder-unique identifying code (ID). The AVI system **10** preferably includes interrogator electronics **20** for control of the interrogator **12**.

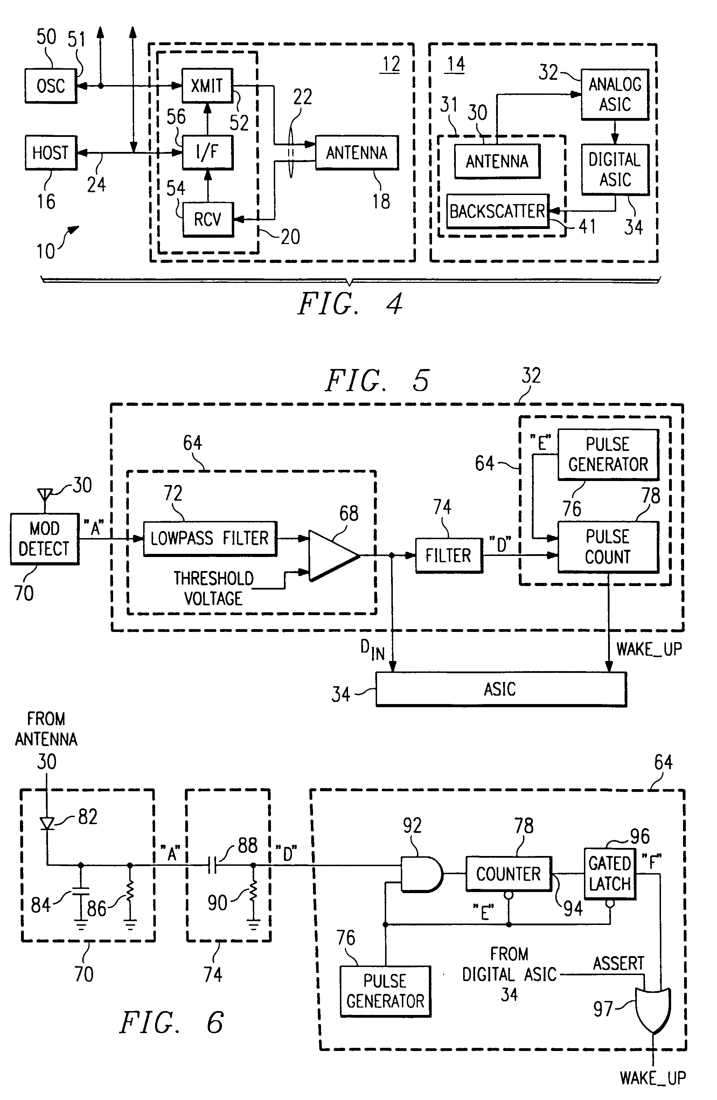

Referring to Figures 2 & 3, multiple traffic lanes **28** are located at a traffic control point such as a toll plaza **29**. Each traffic lane **28** has an associated interrogator **12**. Each interrogator **12** initiates and maintains communication via an RF data link with transponders **14** carried on vehicles **26** travelling within the interrogator's **12** associated lane **28**. The interrogators **12** may have unique internal electrical parameters such as interrogator lane position, interrogator control parameters, and interrogator reference frequency. The role of the interrogator **12** in this application is: to trigger or activate a transponder **14**, to interrogate or poll the transponder **14** for specific information, and if a valid data exchange has taken place, to acknowledge that fact to the transponder **14**. As shown in Figs. 1-3, the interrogator **12** has an antenna **18** which is preferably mounted above the roadway. Preferably, the antenna **18** will have circular polarization, but advantages may exist which will motivate the use of other choices of polarization including linear and elliptical. Interrogator electronics **20** are connected to the antenna **18** by suitable cable, such as for example an RF coax **22**.

The interrogator **12** communicates in a wireless fashion with the transponder **14** by sending on/off keyed modulated signals to the transponder **14**. Interrogator **12** then sends a continuous wave RF signal to the transponder **14**. The transponder **14** may respond to the interrogator **12** by backscatter modulating the continuous wave RF signal such as described in U.S. Patent number 4,739,328 by Koelle, et al. Details of the communication between the interrogator **12** and the transponder **14** will be further described herein. The function of the optional host **16** is to control the operations of the interrogator **12** and the peripheral functions of the toll plaza. Such peripheral functions might include operation of traffic control gates and other lane enforcement equipment such as cameras and traffic lights. Still other peripheral functions might include communications between interrogators **12** and communications with a central office computer (not shown) that might maintain account balance information. Connection **24** between the interrogator **12** and the host **16** as shown in Figure 1 may be an ethernet, token ring, RS232, RS422 or other connection.

The interrogator **12** of Fig. 1 is housed in two modules: the electronics module **20** and the antenna **18**. As shown in Fig. 4, the electronics module **20** contains a transmitter **52**, a receiver **54**, and a control circuit **56**. The interconnection **22** between the antenna **18** and the electronics module **20** consists of a low-loss RF interconnect, which is typically a coaxial cable, and a multiconductor cable capable of supplying power and control signal information.

Figure 2 shows a side view of a typical AVI system **10** installation. In this figure a vehicle **26** travels on a vehicle lane **28a-c** and approaches the antenna **18**. A transponder **14** is located on or within a vehicle **26**. Preferably the transponder **14** is mounted to the vehicle front window. In certain applications such as in unusually large vehicles other locations such as on a truck's bumper might be appropriate to reduce variation in height of transponder **14**. As shown in the figure, the vehicle **26** carrying the transponder **14** approaches the interrogator **18** at the toll plaza **29**. Further details regarding the communication between the transponder **14** and the interrogator **12** will be discussed herein. The components of the interrogator **12** and transponder **14** will also be discussed in greater detail.

Figure 3 is a top view of an AVI system **10** comprising three lanes **28a-c**. The three lanes **28a-c** are shown merely for illustration purposes; this system **10** could be applied to one or multiple lanes. Preferably, circuitry is provided in the interrogator **12** for determining in which of the lanes the transponder **14** is located. Claude A. Sharpe's U.S. Patent Appl. No. 08/021,123, assigned to Texas Instruments, provides one such lane discrimination circuit and method.

Figure 4 provides a block diagram of the major components of the AVI system **10**. First, a transponder **14** will be described with reference to Figure 4 together with Figures 2 and 3. The AVI system **10** preferably comprises directional antennas **18**, each antenna **18** focused on an associated vehicle lane **28a,28b,28c**. A vehicle **26** or vehicles **26** may travel on each lane **28a-c**, each vehicle **26** carrying one or more transponders **14**. Each transponder **14** preferably comprises: an antenna **30**, an analog or analog/digital ASIC **32**, a digital ASIC **34**, and a modulated reflector **41**. Antenna **30** and modulated reflector **41** may form a single integrated antenna **31**. Preferably ASIC **32** and ASIC **34** are integrated as a single ASIC.

With further reference to Figures 3 and 4, the transponder antenna **30** is operable to receive RF transmissions from the interrogator **12**. The analog ASIC **32** converts a signal supplied by the transponder antenna **30** to a voltage which upon exceeding a threshold activates the transponder **14**. According to the preferred embodiment of the present invention, the analog ASIC **32** senses high frequency modulation present upon the signal from the transponder antenna **30** and will only activate the transponder **14** upon presence of that specific modulation frequency. In this way, the transponder is relatively immune being awakened by spurious RF transmissions not originating in the interrogator **12**, but only is activated when a particular frequency is transmitted by the interrogator **12**. The voltage threshold may be adjustable.

Preferably, each transponder **14** only responds to interrogation signals **15a** from the interrogator antenna **18a-c** positioned within the lane **28a-c** in which the vehicle **26** carrying the transponder **14** is travelling. To accomplish this desired result, the transponder **14** compares a first field strength pulse **44a** received from the first directional antenna **18a** to a second field strength pulse **44b** received from the second directional antenna **18b**. The field strength pulse **44a-c** received with the greatest signal intensity will be from the interrogator antenna **18a-c** that is positioned in the lane **28a-c** in which the vehicle **26** carrying the transponder **14** is travelling The transponder **14** may then respond to messages from the appropriate interrogator **12** (i.e., the interrogator associated with the lane **28a,28b,** or **28c** in which the transponder **14** is travelling). A similar procedure will be repeated between other lane pairs (e.g., **28a-28c, 28b-28c**). The transponder **14** is then operable to demodulate a interrogation signal **15a**, which in the preferred embodiment is amplitude modulated, from the appropriate interrogator **12**. The transponder **14** is then operable to backscatter modulate a continuous wave signal sent by the interrogator **12** to generate the response signal **15b** via the modulated reflector **41**.

Referring still to Fig. 4, the analog ASIC **32** and digital ASIC **34** typically process the interrogation signal received from the transmitter **52** and formulate the necessary reply data. The digital ASIC **34** then provides a formatted reply data stream to the modulated reflector **41**. This ASIC **34** might be a simple digital system using a fixed format, or a more versatile digital processing system which can incorporate a number of options. Many functions can be envisioned for the ASIC **34** to accomplish. Examples of such functions include but are not limited to: data storage, data exchange history, and battery capacity warning. The modulated reflector **41** is modulated by changing its apparent wave length, preferably between one fourth and one half the carrier wave length. When the apparent wave length of the modulated reflector **41** is ½þ, then the antenna **30** reflects a large portion of the incident carrier energy. When the modulated reflector **41** has an apparent length of ¼þ, it reflects very little of the incident carrier. As is well known in the art, a switching of an antenna between ½þ and ¼þ can be accomplished by connecting or disconnecting two ¼þ stubs. For the described embodiment, the change in Reflective Cross Section (RCS) is preferably between 45 cm² and 100 cm². By varying the RCS according to the specified format, data is sent from the transponder **14** to the interrogator **12**. The transponders **14** are typically self-contained on a small credit card size assembly that is completely portable. Preferably an internal battery is provided to give operating power to the transponder **14**. Alternatively the transponder **14** might gain its operating power directly from the RF signal as set forth in commonly assigned U.S. Patent 5,053,774 to Schuermann.

Now that the components of the transponder **14** have been generally described, in Figure 5 with further reference to Figures 3-4, a preferred embodiment interrogator **12** will now be generally described. The interrogator **12** is located at a specific point where data exchange is desired, such as a toll plaza **29**. The AVI system **10** may include a common reference oscillator **50** which generates at its output **51** a reference carrier wave for synchronization of the interrogators **12**. Each interrogator **12** has a directional antenna **18** and a transmitter **52** which transmit a trigger signal **42** (see Fig. 3) of sufficient field strength and/or modulation type at a pre-selected distance to trigger or activate a transponder **14** being carried in a vehicle **26** in the interrogator's associated vehicle lane **28**. The preferred embodiment transponder **14** will be activated when a low power wake-up circuit **64** detects in the received signal a pre-selected modulation frequency.

Still referring to Fig. 5, if the wake-up circuit **64** receives the prescribed modulation signal, the wake-up circuit **64** will then apply clocks to the higher power consumption digital ASIC **34**. In this fashion power is conserved because the wake-up circuit **64**, which constantly monitors for trigger signals **42** (see Fig. 3), consumes much less power than the digital ASIC **34**, which is only activated upon detection of a trigger signal **42** (see Fig. 3). After transmitting the trigger signal **42** (see Fig. 3), the interrogator **12** transmits an interrogation to the remote transponder **14**. The interrogation is preferably transmitted using On-Off Keying. Upon completion of the interrogation, the transmitter **52** then transmits a continuous wave RF signal onto the transponder **14** so the transponder **14** may backscatter modulate the continuous wave RF signal to generate the response signal **15b**. The interrogator **12** further includes a receiver **54** for reception of the response signal **15b** and for separation of the response signal **15b** from spurious non-modulated reflections. The interrogator transmitter **52** and receiver **54** operate under control of a control interface circuit **56**. The host **16** by way of the control interface circuit **56** directs the transmitter **52** to send the trigger signal **42**, followed by the interrogation signal.

To allow proper lane discrimination for a three lane scenario, a first interrogator **12a**, second interrogator **12b**, and third interrogator **12c** send simultaneous first, second, and third interrogation signals, respectively. During a first lane discrimination period **45**, first interrogator **12a** sends a first field strength pulse **44a** and second or third interrogators **12b,12c** send no RF energy. During a second lane discrimination period **46**, a second interrogator **12b** sends a second field strength pulse **44b** while first and third interrogators **12a,12c** send no RF energy. During a third lane discrimination period **47**, a third interrogator **12c** sends a third field strength pulse **44c** while first and second interrogators **12a,12b** send no RF energy. In this manner a transponder **14** travelling in a vehicle **26** in one of the lanes **28a,28b,28c** associated with each interrogator **12a,12b,28c** can determine by comparing the amplitude of the pulses **44a,44b,44c** received during the first, second, and third field strength periods **45,46,47,** in which of the three lanes **28a-c** it is travelling. The host **16** by way of the control interface circuit **56** is still further operable to direct the transmitter **52** to send the continuous wave RF signal following the interrogation and to simultaneously direct the receiver **54** to receive the response signal **15b**. This sequence can be extended to any number of lanes.

The electronic components **20** of the interrogator **12** will now be described in more detail with respect to Figure 4. The electronics **20** comprise a transmitter **52** that is operable to send signals to the antenna **18** for the interrogation of transponders **14**. Typically transmitter **52** receives signals from the host **16** via the host connection **24**. During the transponder reply the transmitter 52 transmits a continuous wave RF signal to the transponder **14**, which then backscatter modulates the continuous wave RF signal with the reply data. The receiver **54** detects the reflected energy, which is backscatter modulated by the transponder **14**, and separates the modulated signal from the non-modulated reflections. Antenna **18**, shown here in electrical communication with the transmitter **52** and the receiver **54**, is a directional antenna **18** with a precisely shaped pattern and is used to radiate and receive RF signals covering a portion of each lane during the data exchange between the interrogator **12** and the transponder **14**. In the described embodiment, a single antenna **18** is used for both the interrogation signal and the response signal **15b**. The antenna **18** is typically mounted approximately **18** feet above the roadway and is preferably positioned to ensure a constant link between the interrogator **12** and the transponder **14** regardless of site-dependent variations. Also shown is the control circuit or host interface **56** used to communicate with the host **16**, which may control all the interrogators **12** at a single toll plaza.

Still referring to Fig. 4, the host interface **56** between the interrogator **12** and the host **16** for certain read/write operations accepts information from the host **16** via the host connection **24** and formats the data for transmission to the vehicle **26** by means of the transmitter **52**. Preferably the communications with the host **16** will not occur until after the transmitter **52** has completed an entire read/write transaction with a transponder **14**. The host interface **56** also decodes the reply data from the transponder **14** by means of the receiver **54** and supplies this reply data to the host **16**. The antenna **18** is preferably weatherproof and designed to operate over the anticipated temperature extremes in its environment.

Referring now to Fig. 4 in light of Fig. 3 for multiple lanes one interrogator **12** will preferably be provided for each lane. All interrogators **12** at a toll location **29** will be coordinated in frequency, power output and antenna pattern to minimize overlap of coverage and interference between adjacent lanes. A different carrier frequency is typically used in each interrogators **12**. Alternatively, adjacent interrogators **12** might have differing carrier frequencies to minimize interference as between the adjacent interrogators **12**, while non-neighboring interrogators might use the same carrier frequency (i.e., where the interrogators are arranged spatially as #1, #2, #3, #4, #5, and #6, interrogators #1, #3, and #5 might use one carrier frequency while interrogators #2, #4, and #6 might use another carrier frequency). A common carrier frequency might be used in all interrogators **12**, such as in a system which provides lane discriminaiton between transponders **14** as as described in the co-assigned Sharpe U.S. Patent Application No. #08/021,123.

The receiver **54** of the interrogator **12** detects the backscatter modulated return signal from the transponder **14**. The amplitude and phase of the return signal will be completely dependent upon the multitude of reflections which occur from a number of sources. Undesired sources of return include the following: vehicles **26** in the same lane as the interrogator **12** creating beamfilling or non-beamfilling unmodulated returns; vehicles **26** in adjacent lanes **28a,28b,28c** creating unmodulated and backscatter modulated returns; fixed obstacles of unknown composition creating unmodulated returns; and leakage from the transmitter **52** to the receiver **54** during transmission of the continuous wave RF signal to the transponder **14**.

Typically, one interrogator **12** is provided for each lane **28** in which a data link is to be enabled. Furthermore, except for site-programmable internal electrical parameters such as lane location, or other controlled parameters, all interrogators **12** are identical and are coordinated in time by a common reference oscillator **50**.

The components of the analog ASIC **32** and the digital ASIC **34** will now be described in greater detail below.

### WAKE-UP BLOCK:

With reference to Figure 5, a more detailed diagram is shown of the analogy ASIC **32**. The interrogation signal is received in the analog ASIC **32** from the antenna **30**. The modulation detector **70** acts to remove the carrier signal from the received interrogation signal and pass this to the first stage circuitry **62**. The first stage circuitry comprises a lowpass filter **72** which removes high frequency components of the signal from the modulation detector **70**. The output of the lowpass filter **72** is further transmitted to a threshold detector **68** that compares the output of the lowpass filter **72** to a reference voltage. The output of the threshold detector **68** will thus be a binary signal which will be an input signal, dᵢₙ, to the digital ASIC **34** and to the wake-up circuitry **64**.

With further respect to Fig. 5, the inventive concepts described herein have significant advantages over the prior art in terms of power consumption. It is of significant importance to design a transponder **14** that consumpes minimal power. The importance of a power-efficient transponders **14** exists whether the transponder **14** is powered by a received RF signal or whether the the transponder operates on a battery. By implementing the inventive concepts described herein, the transponder **14** will normally be in a sensing mode with a 1/24 duty cycle sleep mode, drawing little energy from the battery or RF energy source. The only energy consumed in this duty cycle sleep mode will be that required by the wake-up circuit **64**.

Still referring to Fig. 5, a high pass filter **74** is provided at the output of the detector **70** to filter out any spurious low frequency signals such as from cellular phones or other sources. The high pass filtered signal is provided from the filter **74** at node "D." The filter **74** may alternatively be a band pass filter. In an alternative embodiment filter **74** may be a low pass filter when the transponder is activated by a low frequency (LF) modulated signal. Upon detection of an RF modulation of the frequency of interest by modulation detector or pulse counter **78**, the wake-up circuit **64** sends an enable signal, "F," to OR gate **97** which will in turn send a wake up signal to the digital ASIC **34** so long as either "F"the clock signal to the digital ASIC **34** to enter an active state. In a first preferred embodiment, the expected modulation frequency will be the high-speed modulation of approximately 100 kHz to 400 kHz. In another preferred embodiment, a low frequency signal of below approximately 1000 Hz is superimposed upon the 915 MHz carrier and this is the modulation signal expected by the pulse counter **78**.

In further reference to Fig. 5, for the first preferred embodiment, the pulse counter **78** is preferably a gated 5 bit counter circuit. The gate is set at a specific frequency so that a range of valid counts is detected. To further save power, the wake-up circuit **64** has its power duty-cycled. For example, every 16 ms, a 2 ms window might be opened (1/8 duty cycle), and within the 2 ms window the detector might be on for 62.5 us and off for 125 us (1/3 duty cycle). This example of duty-cycling (1/8 x 1/3 = 1/24 duty cycle) would effectively reduce the power consumption to 1/24th of the original value.

Referring now to Figure 6, the wake-up circuitry **60** is shown in still greater detail. If modulation is detected, the digital ASIC **34** is activated and the pulse counter **78** is kept active by an "assert" signal from the main controller block **140** (see Fig. 11) of the digital ASIC **34**. If the modulated RF signal disappears, the main controller block **140** by the "assert" signal may keep the wake up signal from OR gate **97** active until the digital ASIC **34** functions are completed. The main controller block **140** will not disable the wake up signal from OR gate **97** until all pending functions are completed.

Still referring to Fig. 6, the detector **70** preferably comprises a diode **82** which receives and rectifies the signal at node "A" from the antenna **30**. A shunt capacitor **84** and shunt resistor **86** act to form a low pass filter having a known time constant so that the 300 kHz Manchester modulation can be extracted from the 915 MHz continuous wave RF signal. A high pass filter **74** then acts to filter out any undesirable low frequency components, The high pass filter **74** comprises a series capacitor **88** and a shunt resistor **90**. It is important to understand that the component values of the detector **70** and the high pass filter **74** are selected depending on the modulation frequency that must be detected to enable the digital ASIC **34** by signal "F", (Fig. 4). In other words, the high pass filter **74** may have a very low corner frequency or may be eliminated altogether if the wake-up circuit **64** is expecting a modulation frequency that is lower.

With further reference to Figure 6, gated comparator **92** receives clock signals from the pulse generator **76** on node "E." The input from the pulse generator **76** serves to gate the voltage pulses from node "D." Thus, if the input from node "D" (flowing from high pass filter **74**) is the correct modulation frequency, gated latch 96 serves to provide a high input to an OR gate **97** that performs a logical OR of the "F" signal and an assert signal from the main controller block **140**. The "F" signal is asserted once the correct count has been reached and until the falling edge of the gating pulse from the pulse generator **76** resets the gated latch **96**. The gated latch **96** serves to provide a high input to a OR gate **97**. Depending on the signal from the gated latch **96** or an "ext assert" signal from an external microcontroller, the output of OR gate 97 provides a "wake-up" signal to the digital ASIC **34** (see Fig. 5).

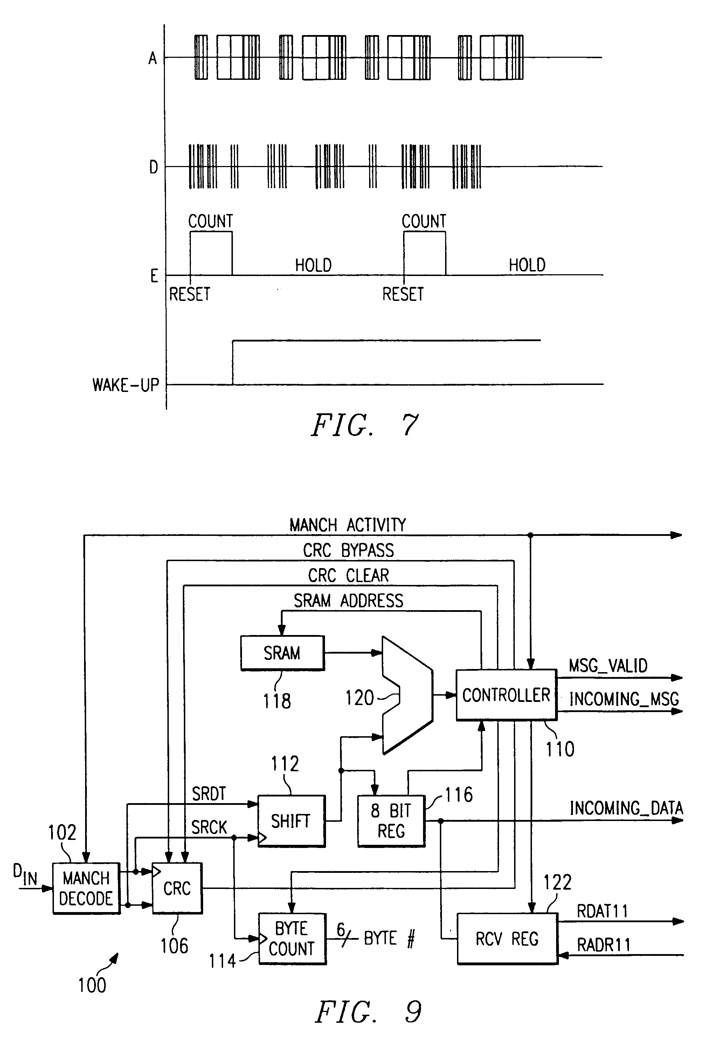

Referring now to Figure 7, a timing diagram for a preferred embodiment modulation detector is shown. The signal at node "D" is shown as a continuous wave 915 MHz signal with 300 kbps Manchester II On-Off Keying (OOK) superimposed. Bursts of 300 kHz modulation occur on the signal at node "D" as the high pass filter removes the 915 MHz carrier signal from the node "A" signal. At node "E" is the gated latch output which exists with a certain duty cycle when modulation is detected by the wake-up circuit **64**. The wake-up signal is the output of OR gate **97**.

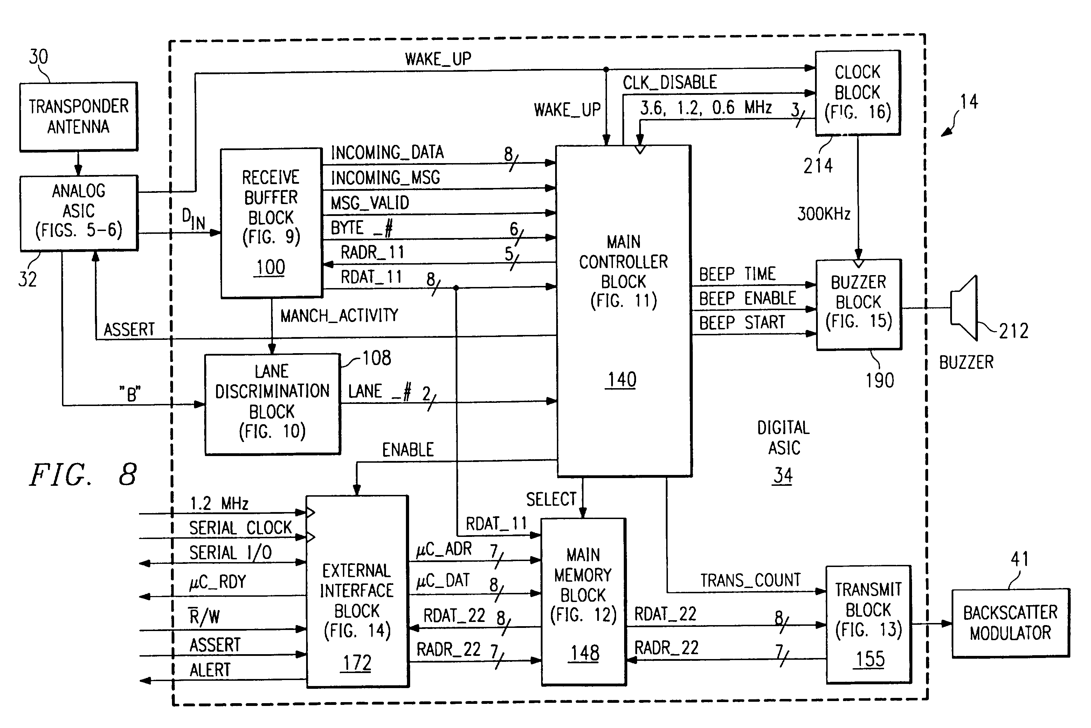

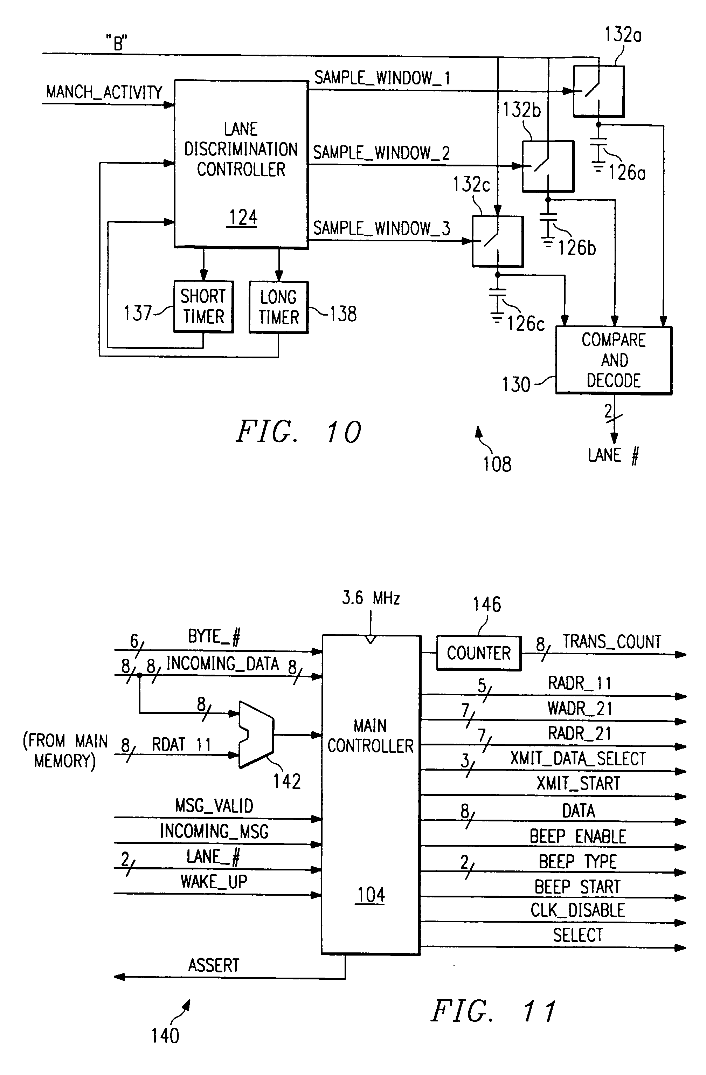

Figure 8 illustrates an overview of the functional blocks **100,108,140, 148,155,172,190,214** within an embodiment of the digital ASIC **34**. Within the digital ASIC **34**, a clock block **214** receives a wake up signal from the analog ASIC **32**, and thereupon begins to generate clock signals, preferably at 3.6 MHz, 1.2 MHz, 0.6 MHz, and 0.3 MHz. These clock signals are transmitted to the above functional blocks, including at least the main controller block **140**. The clock block **214** preferably continues generation of the clock signals, regardless of the status of the wake up signal received from the analog ASIC **32**, until receiving a clk disable signal from the main controller block **140**. Once the RF signal level is removed and the main controller block **140** is in the idle state (i.e., the main controller block **140** has completed all its necessary operations), it will signal the clock block **214** via the clk disable signal and 0.5 ms later the clock block **214** will disable oscillation of all the clocks. The digital ASIC **34** will remain deactivated until the next RF signal of proper level is detected and the analog ASIC **32** sends another wake up signal. The nature of CMOS digital logic is that it draws power only when changing states, or to a lesser degree when it is being simply being clocked; therefore, the static current drain of all the digital CMOS logic with the clocks will be very small (in the nano amp range).

Still referring to Fig. 8, the receive buffer block **100** receives a data-bearing signal, dᵢₙ, from the analog ASIC **32**. The receive buffer block **100** decodes this signal autonomously from the main controller block **140** and is operable to transmit received data to the main controller block **140** or to main memory block **148**. The decoded signal can be received by the main controller block **140** without buffering via the signal, incoming data. Alternatively, the decoded sinal can be stored and buffered in the receive register **122** (not shown, see Fig. 9) and accessed by the main controller block **140** sending an address signal radr 11. The data output rdat 11 of the receive register **122** (see Fig. 9) may be received directly by the main controller block **140**, or it may be received by the main memory block **148** for storage therein. The receive buffer block **100** preferably also provides an incoming msg signal to notify the main controller block **140** that an interrogation is being received. Furhtermore, the receive buffer block **100** may provide a msg valid signal to the main controller block **140** to inform it that the interrogation was received without received error. The receive buffer block **100** also might provide a signal, manch active, to the lane discrimination block **108** to notify the lane discrimination block **108** that the receive buffer block **100** is actively decoding the data-bearing signal, d_{in.}

With further reference to Fig. 8, the lane discrimination block **108** is operable to receive dᵢₙ and manch activity and determine in which vehicle lane **28** (Fig. 3), the vehicle **26** is travelling. The details of this lane discrimination block **108** is described more fully below and in Claude A. Sharpe's U.S. Patent Appl. No. 08/021,123, assigned to Texas Instruments. The lane discrimination block **108** upon determination of the vehicle lane **28** (Fig. 3) in which the vehicle **26** (Fig. 2) is travelling, may transmit this information to main controller block **140** as the signal, lane #.

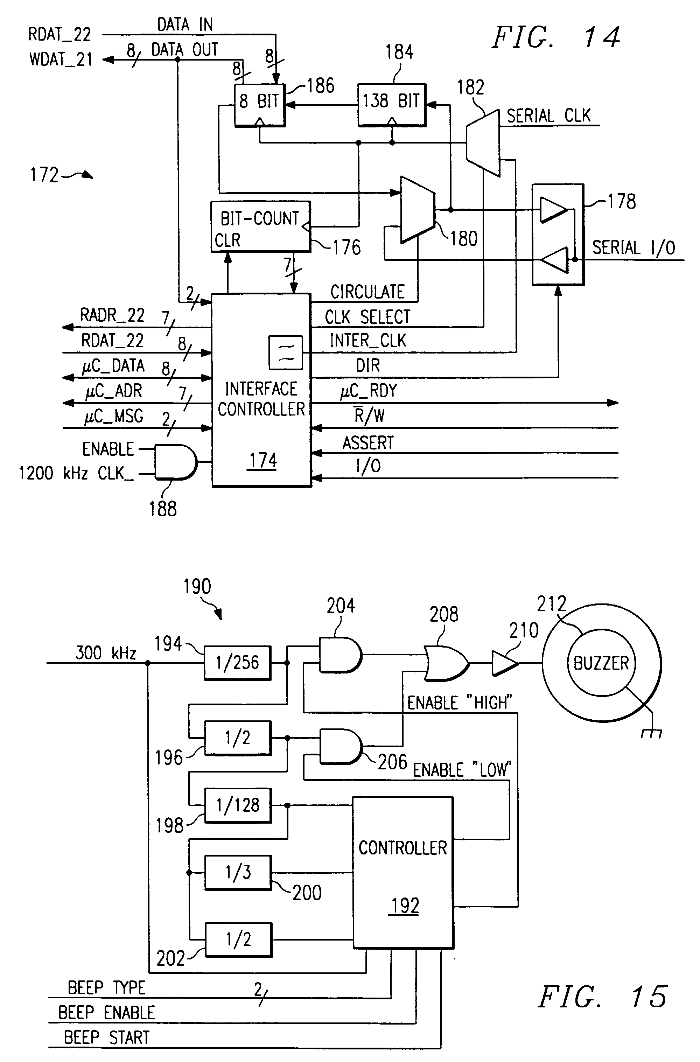

The main memory block **148** shown in Fig. 8 is operable to store data received from the receive buffer block **100** as mentioned above. Further, the main memory block **148** is operable to receive data from an external micro-controller (not shown) via the external interface block **172**. This data exchange is via the addressing signal, radr 22 and via the data signal, rdat 22. The main memory block **148** may also receive data sent from the external microcontroller (not shown) via address and data signals, µC adr and µC dat, respectively. The main memory block **148** is may be enabled or disabled by the main controller block **140** by the select signal. The external interface block **172** operates as an interface between the main memory block **148** and an external microcontroller (not shown). The external interface block **148** receives an enable signal from the main controller block **140** and a clock signal from the clock block **214**. Preferably, the clock signal is 1.2 MHz. In this embodiment, the external interface block **172** communicates with the external microcontroller (not shown) by a serial clk signal, a serial I/O signal, and a number of handshaking signals (µC rdy, R /W, and ext assert) which will be described in more detail in the description with respect to Fig. 14.

A transmit block **155** is also shown in Fig. 8. The transmit block **155** operates under control of the main controller block **140** to transmit data in a response signal **15b** to the interrogator **14** (not shown, see Fig. 1) by preferably backscatter modulating the data upon a continuous wave RF signal from the interrogator **14** using backscatter modulator **41**. The transmit block **155** receives data from the main memory block **148** via the data signal rdat 21 and addresses the main memory block **148** using the address signal radr 21. The transmit block **155** communicates with the main controller block **140** using signals (xmit data select, start, xmit complete, and trans count) which will be described in more detail in the description with respect to Fig. 14.

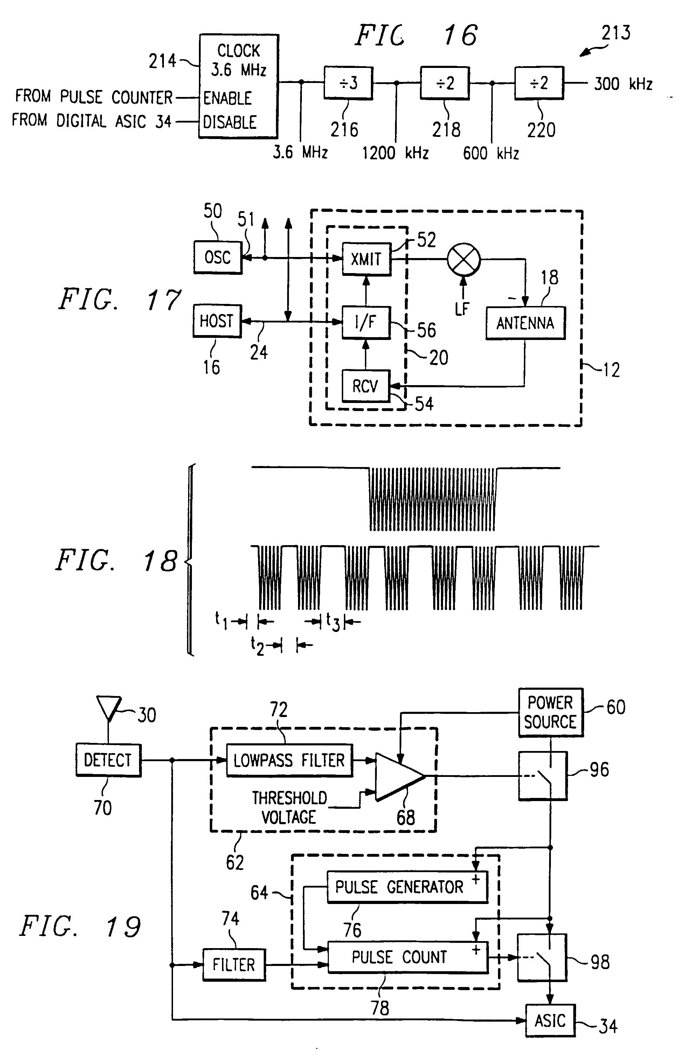

A buzzer block **190** shown in Fig. 8 operates to transmit indicating tones to an operator via a buzzer **212**. The buzzer block **190** operates under control of the main controller block **140**. The main controller block **140** sends control signals beep type, beep enable, beep start to the buzzer block **190**. These control signals will be described in more detail in the description with respect to Fig. 15.

With further reference to Fig. 8, upon completion of a successful transaction comprising an interrogation and a response in which no data errors occurred, the transponder **14**, for example, might enter a **10** second period during which it will not respond to further interrogations having the same agency code as the just-completed transaction. Interrogations received during this nonresponsive period will be compared to the previous agency code, and will not be responded to if the agency code is the same as the previous agency code. If a different, valid agency code is received during the nonresponsive period the transponder 14 may respond to the new interrogation.

### RECEIVE/BUFFER BLOCK:

Referring now to Figure 9, the components of the receive buffer block **100** of the digital ASIC 34 will be described. The receiver block **100** contains a Manchester decoder **102**, CRC-CCITT calculator **106**, and a state controller **110**. The receiver block **100** will decode transmissions from the interrogator **12**, determine in which lane the transponder **14** is located, and calculate the incoming message's CRC. The Manchester decoder **102** receives data-bearing signal, dᵢₙ, from the analog ASIC **32**. The Manchester decoder **102** comprises a digital phase-locked loop at 3.6 MHz to enable the Manchester to synchronize to dᵢₙ. The Manchester decoder **102** provides at its output a received serial data stream, SRDT, and a clock signal, SRCK, derived from the data-bearing signal, d_{in.} The manchester decoder **102** also provides a manch activity signal to the lane discrimination block 108 (see Fig. 8). The purpose of the manch activity signal will be later described with respect to Fig. 10.

Still referring to Fig. 9, the serial data stream, SRDT, is fed into a CRC generator **106**. The CRC of the incoming message is calculated using the CCITT polynomial (X¹⁶ + x¹² + x⁵ + 1). The receive controller **110** determines which data bits are calculated in the CRC (the overhead bits are not calculated as part of the CRC) and activates the CRC generator **106** to begin calculating the CRC after the overhead bits have all been received. A byte counter **114** is provided to receive the serial data stream and count the number of bytes received. The number of bytes may be counted by incrementing the byte counter **114** with every eighth pulse of the serial data clock and transmitting the count to the main controller block **140** (see Fig. 8). An eight-bit holding register **116** is provided for holding bytes as they are transmitted from the serial-to-parallel shift register **112**.

A data comparator **120** is provided so the receive controller **110** can compare data from the serial-to-parallel shift register with that stored in a SRAM **118**. In this manner, for example, the tranponder identification might be stored in the SRAM **118** and compared to an ID code gleaned from the serial data, SRDT by the receive controller **110** via the serial-to-parallel shift register **112**. Thus the receive buffer block **100** operates autonomously from the main controller **104**. The receive controller **110** senses received Manchester-encoded data on the manch activity line from the Manchester decoder **102**. The receive controller **110** is further operable to bypass the CRC generator **106** or to reset the CRC generator **106** using control lines crc bypass and crc clear. Upon sensing the start of receipt of Manchester-encoded signals, the controller **110** preferably resets the CRC generator **106** and resets the byte count register **114**. The controller **110** may control the receive register **122** to store data from the eight-bit holding register **116**.

### LANE DISCRIMINATION BLOCK:

Referring now to Figure 10, the lane discrimination block **108** includes a lane discrimination controller **124** that samples at three specific times after the interrogation of the transponder **14** by the interrogator **12** is initiated (see Fig. 3). The lane discrimination controller **124** stores voltage samples from node "B" of the analog ASIC **32** (see Figs. 5, 8) in capacitors **126a, 126b, 126c,** whose voltages become inputs to an voltage comparator/decoder **130**. The lane discrimination controller **124** samples node "B" during sample periods **45,46,47** (see Fig. 3) to sample field strength pulses **44a-c** (see Fig. 3). Switches **132a,134b,132c** connect the capacitors **126a,126b,126c,** respectively, to the node "B" input voltage (see Figs. 5, 8). The output of the comparator **130** is sampled a specific time later (after settling) to determine which signal was stronger, and therefore in which lane **28a,28b,28c** the transponder **14** is located.

Still referring to Fig. 10, the lane discrimination block **108** is preferably autonomously operable to sample the field strength pulses without need for supervision from the main controller block **104** (see Fig. 8) or other controllers. The lane discrimination controller **124** receives the manch activity signal from the Receive Buffer Block **100** (See Fig. 8). Upon the detection of Manchester encoded signals (manch activity = high), the lane discrimination controller **124** starts a long timer **138** to await the completion of the incoming interrogation (see Fig. 3). After the long timer **138** has completed its cycle, the lane discrimination controller **124** begins to monitor the node "B" voltage for field strength pulses **44a-c** (see Fig. 3). A short timer **137** provides 3.3 µs sample timing between the pulses. Using this 3.3 µs timing, the lane discrimination controller **124** is properly syncronized to the sample periods **45,46,47** (see Fig. 3). It should be understood that the timing periods described above are merely exemplary and that other periods may be used depending on system design parameters such as the number of lanes being discriminated between and the length of the interrogation and timing pulses.

### MAIN CONTROLLER AND COMPARATOR BLOCK:

With respect to Figure 11, the main controller block **140** controls the overall actions of the digital ASIC **34**. The main controller **104** is awakened by the "wake-up" signal from the analog ASIC **32** (see Fig. 8). The main controller **104** then makes decisions based on the incoming message content and the current transaction sequence. The comparator **142** takes the incoming messages from the receive buffer **122**, verifies the validity of the received message using the calculated CRC, and performs comparisons on the incoming message information. The main controller **104** executes the appropriate command sequence.

Still referring to Fig. **11,** a Record Type Code (16 bits) of the incoming interrogation is used to determine the order and type of comparisons performed. This code uniquely defines the transponder message fields and functions permissible. By way of example, hexadecimal numbers 1 through 7FFF may be set aside for transponder message structures and 8000 through FFFF may be dedicated for reader-to-transponder message structures. After the interrogation has been tested for data errors using its CRC, the Record Type Code is examined and the comparator circuit **142** sets flags in accordance with the Record Type Code. The main controller **104** acts upon the flags generated by the comparator circuit **142** and takes the appropriate actions to analyze the data content of the interrogation, to generate the data for the transponder's **14** responses, and to signal the optional external microcontroller (not shown) or to perform ASIC maintenance functions (discussed below under the heading "MAINTENANCE MODE AND MESSAGES"). The main controller **104** also acts to load the main memory block **148** (see Fig. 8) with information by providing addresses to the main memory block **148** in which to store data. Typically the source of this data would be the received interrogation or the external microcontroller (not shown).

With further respect to Fig. 11, transaction counter **146** is an 8 bit counter which is incremented at the end of an acknowledgment message from the interrogator **12** (see Fig. 1) if the transaction was successfully completed (e.g., the interrogator **12** received a valid ID code from the transponder **14**). The transaction counter **146**, though part of the main controller **104**, is addressed within the address space of memory block A. The transaction counter **146** provides a circulating 8 bit number which can be used to track successful toll transactions and maintenance operations for bookkeeping purposes (much as a "check number" keeps track of personal bank transactions). The value of the transaction counter is not normally programmed, but may be reset to zero by resetting the ASIC via the external reset pin or by another method.

As can be seen in Fig. 11, in addition to performing functions relating to the receipt and processing interrogation messages, the main controller **104** acts somewhat as a nerve center for the transponder **14**. Many of the control signals pass to and from the main controller **104** to the other function blocks **100,108,140, 148,155,172,190,214**. The main controller **104** receives its timing from the exemplary 3.6 MHz clock from the clock block **214**. The clock block **214** preferably continues generation of the clock signals, regardless of the status of the wake up signal received from the analog ASIC **32**, until receiving the clk disable signal from the main controller **104**.

Still referring to Fig. 11, the main controller **104** may receive data from the receive buffer block **100** either without buffering via the signal, incoming data. Alternatively, the decoded signal can be stored and buffered in the receive register **122** (not shown, see Fig. 9) and accessed by the main controller block **140** sending an address signal radr 11. The main controller **104** is also operable to store data in main memory block **148** by sending address signal wadr 21 and by enabling main memory block **148** by the "select" signal. Main memory block **148**, once so selected, will be operable to receive data directly from the receive buffer block **100** by signal rdat 11. The receive buffer block **100** preferably also provides an incoming msg signal to notify the main controller block **140** that an interrogation is being received. Furhtermore, the receive buffer block **100** may provide a msg valid signal to the main controller block **140** to inform it that the interrogation was received without received error.

With further reference to Fig. 11, the main controller **104** receives a signal, lane #, from the lane discrimination block **108** to determine in which vehicle lane **28** (Fig. 3) the vehicle **26** bearing the transponder is travelling (see Fig. 2). The transmit block **155** operates under control of the main controller block **140** to transmit data in a response signal **15b** to the interrogator **14** (not shown, see Fig. 1) by preferably backscatter modulating the data upon a continuous wave RF signal from the interrogator 14 using backscatter modulator **41**. The transmit block **155** receives data from the main memory block **148** via the data signal rdat 21 and addresses the main memory block **148** using the address signal radr 21. The transmit block **155** communicates with the main controller block **140** using signals (xmit data select, start, xmit complete, and trans count) which will be described in more detail in the description with respect to Fig. 14. The main controller **104** controls the buzzer block by control signals beep type, beep enable, and beep start. These control signals will be described in more detail in the description with respect to Fig. 15.

### MEMORY BLOCK:

The main memory **150** shown in Fig. 12 has memory blocks A, B, C, D and M. Preferably, each of the exemplary five blocks of memory is available for transmission to the interrogator **12** by the transmit block **155** (see Fig. 8). The memory **150** is preferably a multi-port SRAM, allowing simultaneous read and write operations. Preferably memory **150** is a SRAM having a capacity of 80 bytes, however, memory **150** might be non-volatile memory (e.g., EEPROM, ROM). Further, memories having more or fewer than 80 bytes could be implemented in an AVI system or other systems in accordance with this invention.

Still referring to Fig. 12, the selection muxes **152,154** allow writing to the memory from the main controller **104**, from the external microcontroller (not shown) through the external interface block **172**. Through the interrogation message, the interrogator **12** may ask the transponder **14** for a 16 byte data transmission of memory block A, B, C, D, or M. As an alternative, the interrogation message might instruct the transponder **14** to send a longer burst of data, such as 32 byte data transmission. For example, a 32 byte data transmission might comprise consecutive transmissions of memory blocks A and B, or of memory blocks A and C, or of memory blocks A and D, or of memory blocks A and M.

The basic function of each of the memory blocks (A,B,C,D,M) might be, for example:
Memory block A: basic accounting information;
Memory block B: law enforcement information;
Memory block C: tollway open-entry information storage;
Memory block D: microprocessor output data transmit buffer;
Memory Block M: maintenance and control functions.
Two special registers are part of memory block A's address space: the transaction counter **146** (not shown, See Fig. 11) and the FLAGS register. Although the transaction counter **146** is part of the main memory's addressing space, because of its logical relationship to the main controller block **140**, it is included in Fig. 11 and the description thereof. The second special register in memory block A is the FLAGS register. This 8 bit register indicates the capabilities of the transponder **14** to the interrogator **12**, and certain bits are programmed by a service center. The individual bits of the FLAGS register are defined as:

| bit # | externally writable? | function |
|---|---|---|
| 0 | yes | 0= no balance stored in transponder, |
| | | 1= account balance stored in transponder |
| 1 | yes | 0= account ok, |
| | | 1= delinquent account |
| 2 | yes | 0= no lane discrimination, |
| | | 1= lane discrimination enabled |
| 3 | yes | 0= internal tag, 1= external tag |
| 4 | no | 0= OK, |
| | | 1= illegally detached from external mounting |
| 5 | yes | (reserved) |
| 6 | no | Battery Consumption Gauge LSB |
| 7 | no | Battery Consumption Gauge MSB |

Bits 0 and 2 are information bits for the interrogator and set at the service center. Bits 1 and 3 reflected enabled or disabled ASIC circuitry, and are set at the service center. Bit 4 is set by the interrogator **12**, but may be reset at a service center. Bits 7 and 6 are the high-order bits from the battery consumption meter.

### An exemplary structure of memory block A:

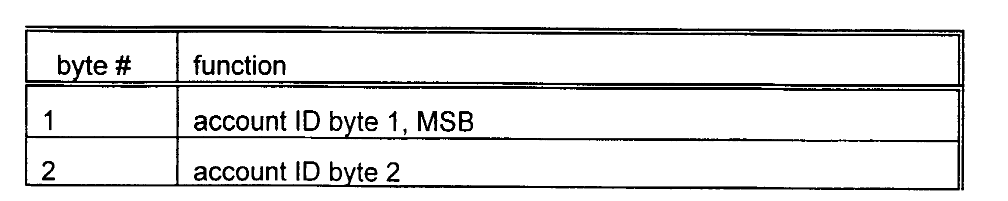

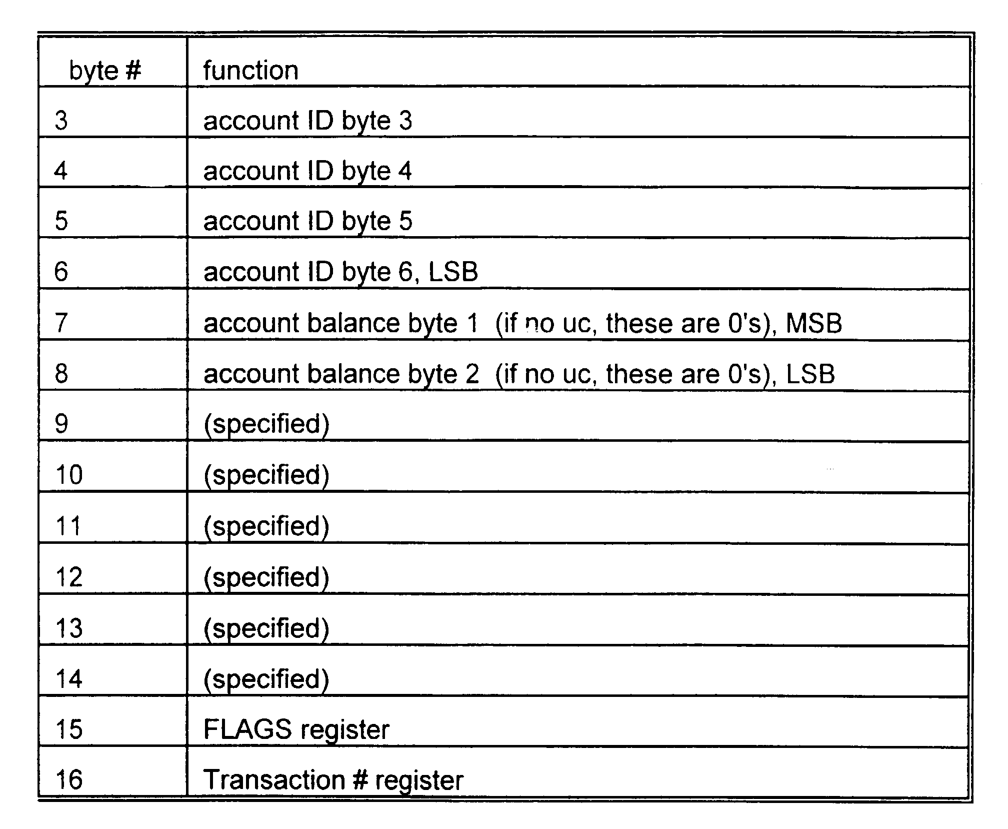

The structure of memory block B may be "free-form" or not rigidly specified as is memory block A. The contents of memory block B (16 bytes) may be written at the service center by the toll agency or other authorized entity, but can be read by the reader **12**. Memory block B may, for example, contain read-only type information (law enforcement info, license plate number, transaction agency code, etc.).

The structure of memory block C may also be "free-form." The purpose of this memory block is to pass information (such as tollway entry info) from one reader to another interrogator **12**. For example, a first interrogator **12** may store information in the transponder **14** by sending data which the main controller block **140** (see Fig. 8) can store in memory block C by sending the appropriate addressing information. Another, subsequent interrogator **12** may then by sending an appropriate Transaction Record Type Cod (such as the Type 3A, described below, under the heading "Transaction Record Type Codes) read the contents of memory block C. By these methods communication may be effected between different interrogators **12**.

Memory block D is intended to be used by the main controller **104** as a transmit buffer (16 bytes) for information from an optional external microcontroller (not shown) to a interrogator **12** or a service center. The contents of memory block D (16 bytes) is primarily intended to be loaded by the external microcontroller (not shown). If an external microcontroller (not shown) is not present in the AVI system **10**, block D can be used "free-form" as another 16 bytes of information which can be loaded by the service center or interrogator **12**, and read by a service center or reader **12**. As an alternative to storing microcontroller access functions, block D might be used as additional storage in normal operations even with a microcontroller present.

### Maintenance Block Register Functions:

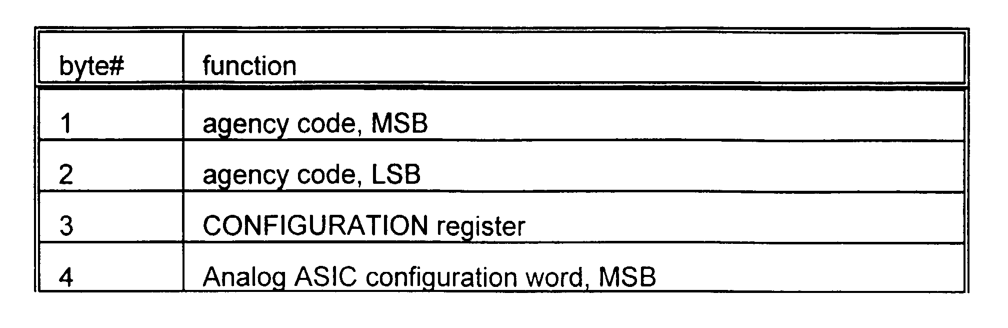

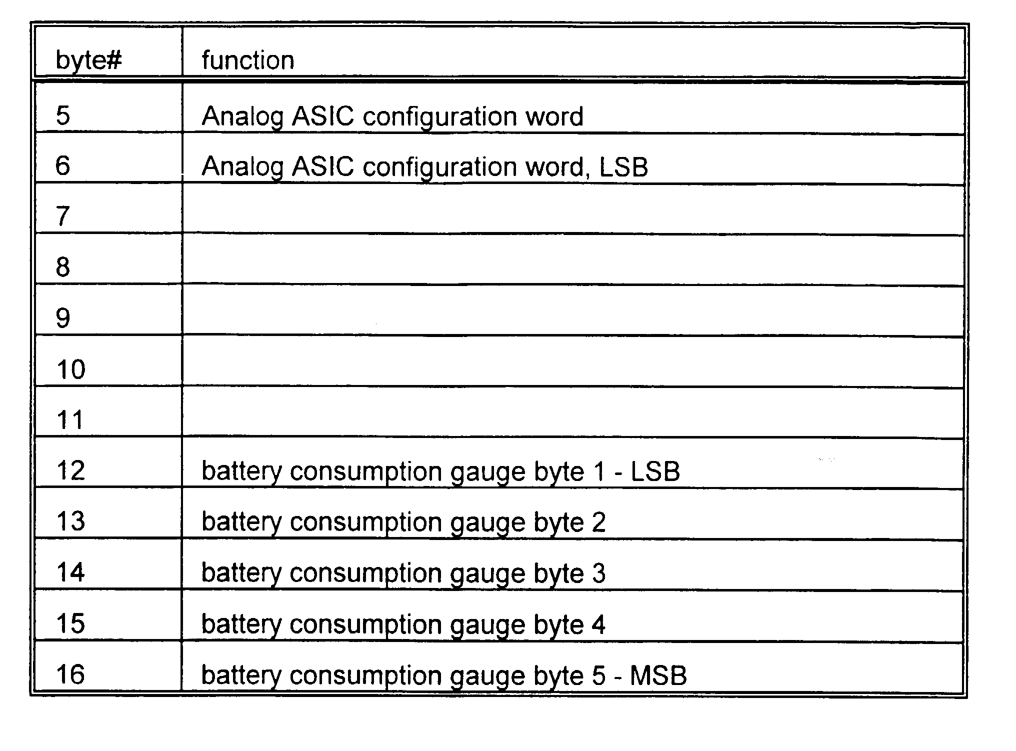

### TRANSMITTER BLOCK:

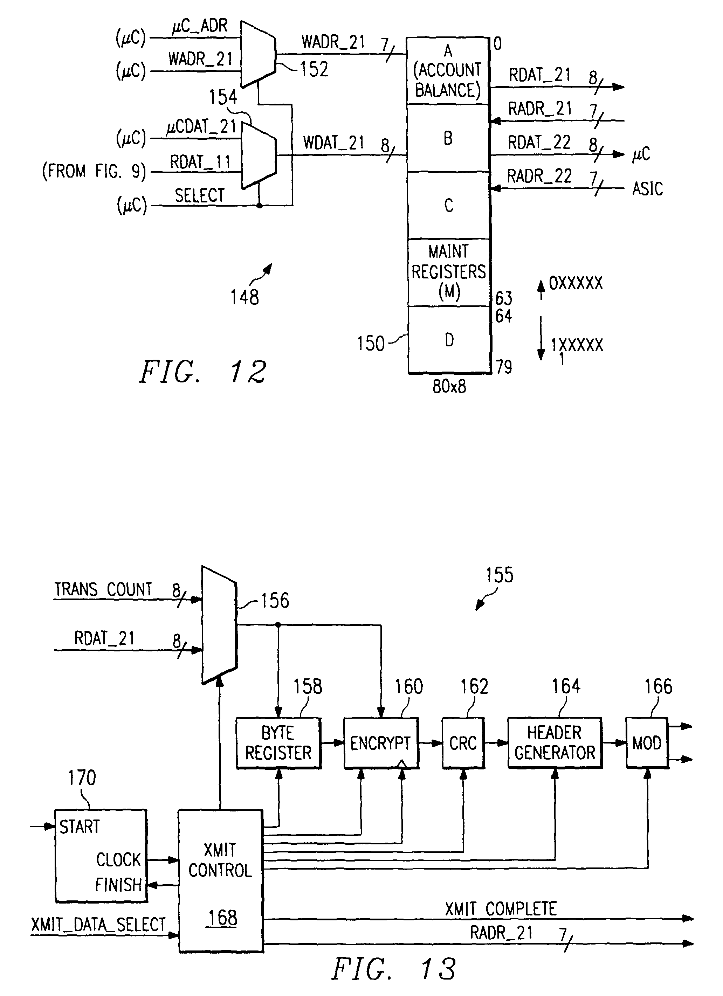

With reference now to Figure 13, the transmitter block **155** contains a mux **156**, a byte register **158**, an encryption circuit **160**, a CRC generator **162**, a header generator **164**, an FSK modulator **166**, and a controller **168**. The serial data stream to be transmitted is encrypted by the encryptor **160**, passed through the CRC generator **162**, and transmitted via the FSK modulator **166**. Upon being commanded by the main controller block **140**, the transmitter block control circuitry **168** is enabled. The transmitter controller **168** then transmits the "selsyn" signal, which may be used by the receiver **54** within the interrogator **12** to self-synchronize (selsyn) with the transponder **12** response. An exemplary selsyn signal might the binary and hexadecimal values: 10101010 and AA, respectively. Upon completion of sychronization with the interrogator receiver **54**, the transmitter controller **168** then signals the main controller **104** for the appropriate memory block data to be clocked in at 300 khz. When the main controller **104** signals the end of data, the CRC circuit **162** clocks out the CRC. Upon completion of the transmission of the CRC bits, the transmitter block **155** enters the idle state and signals the main controller **104** to disable the transmitter clock block **214** for lowest power consumption.

The encryption circuit **160** uses multiple keys. The encryption function may be deactivated at the service center. The CRC generator **162** calculates the CRC using the CCITT polynomial (x¹⁶ + x¹² + x⁵ + 1). The data input to the CRC generator **162** is the encrypted data stream. The CRC value is always transmitted as unencrypted information.

### INTERFACE CONTROLLER BLOCK:

Figure 14 shows an external controller interface circuit **172**. The interface circuit **172** provides flexibility in the transponder **14** design, allowing future upgrades to the system with minimal effort. The interface circuit **172** allows an external microcontroller (not shown) to communicate with the transponder **14**. The interface controller **174** may be activated by the main controller **104** by the "enable" signal between the two functional blocks (see Fig. 8). When awakened by the external microcontroller, the interface controller **174** senses that the "ext assert" signal is active and will proceed to communicate with the external microcontroller. The interface circuit **172** overcomes problems with designing the transponder **14** for future compatibility with unknown external circuitry having unknown future interface requirements. In order to allow the unspecified external circuitry or external microcontroller to access the transponder memory **150** at a clock rate of its own choosing, a buffer memory comprising an 8 bit shift register 186 and a **138** bit shift register (146 bit shift register) **184** is provided.

The interface controller **174** forms the heart of the interface circuit **172**. In a write mode, the transponder **14** communicates with the external microcontroller. The interface controller **174** receives messages from the main controller **104** via the control line µC MSG and will wake up the external microcontroller with the signal µC RDY. Data is loaded from the main memory **150** into the 8 bit shift register **186**. Once a byte is loaded in parallel into the 8 bit shift register **186**, the 8 bits are then circulated serially into the **138** bit shift register through the mux **180**. The function of mux **180** is to allow data to be clocked into the **138** bit shift register **184** from the 8 bit shift register **186** or to allow it to be clocked in from the external micro-controller via the serial I/O buffer **178**. As can be seen in Fig. 14, when the "circulate" signal is low-asserted, data passes through the mux **180** from the serial I/O buffer **178**. When the "circulate" signal is high-asserted, data passes through the mux **180** from the serial output of the 8 bit shift register **186**. Thus, the data can be loaded into the 8 bit shift register **186** in groups of 8 and circulated about into the **138** bit shift register **184** until the message is completely loaded. Once the message is completely loaded, the "circulate" signal is low-asserted. Alternatively, the interface controller **174** may be activated by the external microcontroller by raising the "ext assert" signal, whether or not the external RF field has activated the transponder **14**. In either case, the interface controller **174** sends a seven bit address, RADR 22 to the main memory block **148** so that data can be loaded into or out of the 8 bit register **186** via RDAT 22.

One of the advantages of having an interface circuit interposed between the main controller **104** and an external microcontroller is that by buffering and by design of the clocking to the **146** bit register **186,184** the external microcontroller is free to send its own serial clock signal to mux **182** for clocking data into or out of the **146** bit register **186,184**. As shown in the figure, the interface controller **174** directs the mux **182** to pass either this serial clock from the external microcontroller or to pass its own clock to the **146** bit register **186,184**. Flexibility thus exists to load and unload data into the register at any practical clock rate of the external microcontroller.

Serial I/O buffer **178** can enable data flow either direction, the direction depending on its single control line, DIR, from the interface controller **174**. Further, not only is the external microcontroller capable of awakening the transponder **14** by the "ext assert" line, the interface controller **174** can awaken the external microcontroller by signaling over the uc rdy signal output. A bit-count circuit **176** monitors the incoming data stream and serves to orient the interface controller **174** to the start of data in the circulating shift register **184**. The function of the interface controller **174** is to read and write 16 bytes of data to/from the optional, external microcontroller and to serially program (configure) the analog ASIC **32**.

The interface controller **174** is capable of direct communication with the main memory **150** through the buses µC MSG, and through the buses RADR 22[0:6] (address), DATA[0:7] (data), and µC ADR[0:7].

A three bit command word is loaded first into the 8 bit register **186**. The three bit command word informs the external microcontroller the nature of the ensuing message. The bytes of information that follow are loaded one byte at a time and then are shifted out and circulated through the mux **180** into the **138** bit shift register. After the ensuing message has been completely loaded, the shift registers **184,186** are clocked until the original two bits are again located at the beginning of the 8 bit register **186**. At this time, the clk select line may asserted so that the serial clock from the external processor can be used to clock the data out of the shift registers **184,186,** the control line into the serial I/O buffer **178** is asserted to allow data to be output, and the uc rdy is asserted to wake up the external microcontroller.

In a first mode, upon awakening, the external microcontroller has the R /W signal set low. The external microcontroller will then serially shift in the first three bits to determine the nature of the ensuing message. After the external microcontroller has clocked in as many bits as required from the three bit message from the transponder **14**, the microcontroller sets its R /W signal high to indicate that it has completed receiving data. Upon seeing the R /W signal asserted high, the interface processor sets the serial I/O buffer **178** to input mode, asserts the circulate signal low so data can again be loaded into the shift registers **184,186** in a circular fashion, and the clock signal is again set to the interface controller **174** so it may again take control of the loading and unloading of the shift register **184,186**.

In another mode, if the external microcontroller has data to send to the digital ASIC **34** it can wake up the interface controller **174** by the "ext assert" signal. As before, the interface controller **174** sets the clock mux **182** to pass the serial clock from the external microcontroller. In this mode, the R /W is asserted high. The external microcontroller will then shift data serially directly into the **138** bit shift register **184** and will continue until it has sent the necessary data and until the data has been shifted **146** times to load the first bit of the message into the 8 bit shift register **186**. The interface controller **174** can then again take control of the clock by asserting the clk select line low to the clock select mux **182**. Data can then be loaded out of the 8 bit shift register **186** into block D the main memory **150**. The data is extracted one byte at a time, after which the clock transitions eight times to serially shift a new byte from the **138** bit register **184** into the 8 bit register **186**. Unloading and shifting continues until the entire message has been transferred into the main memory **150**.

### ASIC COMMAND STRUCTURE AND PROTOCOL:

The preferred embodiment ASIC **34** uses the CALTRANS specification for its communications protocol. The CALTRANS specification is specific to many aspects of the message content, and the ASIC command structure complies with the CALTRANS requirements.

The interrogator **12** commands the transponder **14** through the use of 4 bytes: the record type (2 bytes) and the status code (2 bytes). The record type is sent as the first 2 bytes following the header in the POLL and the ACKNOWLEDGE messages, and the status code is included as part of the ACKNOWLEDGE message only.

The record type and status code have different effects upon the ASIC **34** depending upon whether the transponder **14** is an ASIC-only unit or if the transponder **14** has a ASIC **34** plus an external microcontroller. Figure 14 in connection with the specification herein illustrates the ASIC interface circuitry for interfacing with an external microcontroller.

The use of the CCITT CRC polynomial and "sanity checks" on record types and the message structure assure that the proper toll transactions will occur without error. Should the ASIC encounter an unknown record type or message, it will ignore the information and no action will be taken.

### Structure of the record type (all messages):

The record type consists of the first two bytes following the header in each POLL and ACKNOWLEDGE message. It may act as a function in itself, or additional commands may be sent via the use of the status code (in the ACKNOWLEDGE message). The basic function of the record type is to tell the receiver (transponder or Interrogator) how to decode the fields in the message that it has just received, and to deliver to the ASIC an instruction to perform.

The CALTRANS specification requires that a record type code range of 0x0001 through 0x7FFF will be reserved for transponder-to-interrogator messages, and the record type code range of 0x8000 through 0xFFFF will be reserved for interrogator-to-transponder messages.

### Transaction Record Type Codes:

The following record types are understood and acted upon by the ASIC (in association with a valid agency code):
(Should on-transponder **14** lane determination be disabled via the FLAGS register, the lane bit in the record type may be ignored and the transponder **14** may will respond to a POLL message regardless of its lane position.)
- 0x8000: Type 1 POLL message- the transponder **14** is requested to send memory block A in the next RESPONSE message (any lane).
- 0x8001: Type 2 POLL message- the transponder **14** is requested to send memory blocks A and B in the next RESPONSE message (any lane).
- 0x8002: Type 3 POLL message- the transponder **14** is requested to send memory blocks A and C in the next RESPONSE message (any lane).
- 0x8003: Type 4 POLL message- the transponder **14** is requested to send memory blocks A and D in the next RESPONSE message (any lane).
- 0x8010: Type 1A POLL message- the transponder **14** is requested to send memory block A in the next Lane A RESPONSE message.
- 0x8011: Type 2A POLL message- the transponder **14** is requested to send memory blocks A and B in the next Lane A RESPONSE message.
- 0x8012: Type 3A POLL message- the transponder **14** is requested to send memory blocks A and C in the next Lane A RESPONSE message.
- 0x8013: Type 4A POLL message- the transponder **14** is requested to send memory blocks A and D in the next Lane A RESPONSE message.
- 0x8020: Type 1B POLL message- the transponder **14** is requested to send memory block A in the next Lane B RESPONSE message.
- 0x8021: Type 2B POLL message- the transponder **14** is requested to send memory blocks A and B in the next Lane B RESPONSE message.
- 0x8022: Type 3B POLL message- the transponder **14** is requested to send memory blocks A and C in the next Lane B RESPONSE message.
- 0x8023: Type 4B POLL message- the transponder **14** is requested to send memory blocks A and D in the next Lane B RESPONSE message.
- 0x8030: Type 1C POLL message- the transponder **14** is requested to send memory block A in the next Lane C RESPONSE message.
- 0x8031: Type 2C POLL message- the transponder **14** is requested to send memory blocks A and B in the next Lane C RESPONSE message.
- 0x8032: Type 3C POLL message- the transponder **14** is requested to send memory blocks A and C in the next Lane C RESPONSE message.
- 0x8033: Type 4C POLL message- the transponder **14** is requested to send memory blocks A and D in the next Lane C RESPONSE message.

The following record types are defined for the RESPONSE message:
- 0x0001: Transaction Type 1 RESPONSE
The transponder **14** is responding with memory block A (16 bytes).
- 0x0002: Transaction Type 2 RESPONSE
The transponder **14** is responding with memory blocks A and B (32 bytes).
- 0x0003: Transaction Type 3 RESPONSE
The transponder **14** is responding with memory blocks A and C (32 bytes).
- 0x0004: Transaction Type 4 RESPONSE
The transponder **14** is responding with memory blocks A and D (32 bytes).

The following record types are defined for the ACKNOWLEDGE message:
- 0xC000: Transaction Type 1 ACKNOWLEDGE message- (transaction successful). The transaction counter **146** is incremented, and the transponder **14** enters a ten second "silence" period. A microcontroller message will be generated. The buzzer will beep 3 short high tones.
- 0xC001: Transaction Type 2 ACKNOWLEDGE message- (transaction pending). The transponder **14** will respond to the next appropriate POLL message. The status code may contain further instructions. A microcontroller message will be generated. This is essentially a "no action" code.
- 0xC002: Transaction Type 3 ACKNOWLEDGE message- (open entry - load block C). The 16 bytes following the status code will be written into memory block C. The transponder **14** enters a ten second "silence" period. The status code and the 16 bytes following the status code will be formatted into a microcontroller message (if a microcontroller is present). The buzzer will beep 1 short high tone.
- 0xC003: Transaction Type 4 ACKNOWLEDGE message- (load block D) The 16 bytes following the status code will be written into memory block D. The transponder **14** enters a ten second "silence" period. The buzzer will beep 1 short high tone.
- 0xC004: Transaction Type 5 ACKNOWLEDGE message- (bounce trans action). The interrogator **12** has read the FLAGS register, and the bounce bit was found to be set by a previous interrogator **12** transaction sequence. The transaction counter 146 is not incremented. The transponder **14** enters a ten second "silence" period. A microcontroller message will be generated. (This might be used to silence a bounced transponder **14** instead of using a Transaction Type 1 record type.) The buzzer will beep 2 long low tones.
- 0xC005: Transaction Type 6 ACKNOWLEDGE message- (load block C) The 16 bytes following the status code will be written into memory block C. The transponder **14** will respond to the next POLL message. The status code and the 16 bytes following the status code will be formatted into a microcontroller message.
- 0xC006: Transaction Type 7 ACKNOWLEDGE message- (load block D) The 16 bytes following the status code will be written into memory block D. The transponder **14** will respond to the next POLL message.
- 0xC007: Transaction Type 8 ACKNOWLEDGE message- (microcontroller message) The status code and the 16 bytes following the status code will be formatted into a microcontroller message. The transponder **14** enters a ten second "silence" period. (This could be used to load the EEPROM history file.) The buzzer will beep 3 short high tones.
- 0xC008: Transaction Type 9 ACKNOWLEDGE message- (transponder **14** turn-on). The ACKNOWLEDGE message contains the previously-silenced transponder 14 account number, and the transponder **14** will now become active and will respond to the next POLL message.
- 0xC009: Transaction Type 10 ACKNOWLEDGE message- (transponder **14** silenced.) No transaction will take place. Although the transponder **14** responded, it is not a proper account for this tollway. The transponder **14** enters a ten second "silence" period. A microcontroller message will be generated. The buzzer will beep 1 long low tone.
- 0xC00A: Transaction Type 11 ACKNOWLEDGE message- (transponder **14** silenced.) No transaction will take place. The transponder **14** enters a ten second "silence" period. No microcontroller message will be generated.
- 0xC00F: Transaction Type 16 ACKNOWLEDGE message- (bounce transponder). The bounce bit will be set in the FLAGS register, and the transaction counter **146** will be incremented. A microcontroller message will be generated. The transponder **14** will continue to respond to an agency or maintenance code POLL request, but the interrogator **12** will recognize immediately that the user account has a problem, and the transponder **14** will require a service center trip. The buzzer will beep 2 long low tones.

### Structure of the status code from the ACKNOWLEDGE message:

The 16 bit status code from the ACKNOWLEDGE message is encoded with special fields. The first three bits (MSB's) are coded as:

| | |
|---|---|
| 000 | no operation |
| 001 | (reserved) |
| 010 | (reserved) |
| 011 | (reserved) |
| 100 | decrements account balance (uc). |
| | Then the next thirteen bits describe an unsigned integer value to decrement from the current balance. |
| 101 | microcontroller function w/o data (uc). Then the next thirteen bits describe a microcontroller function to perform. |
| 110 | microcontroller function with data (uc). Then the next three bits describes the number of data bytes that follow (as n plus one times two). i.e., 000 = two data bytes follow. 001 = four data bytes follow. 111 = sixteen data bytes follow. |
| 111 | (reserved) |

### Agency Codes:

The agency code represents the two bytes transmitted after the record type in the POLL message, and it consists of the MSB byte and the LSB byte. The ASIC **34** will have the ability to store two bytes of user-defined agency code for these comparisons.

For a transponder **14** to immediately respond to a interrogator **12**, one of two conditions must be met:
1) the MSB and LSB bytes of the incoming agency code must match the user-defined agency code, or
2) the MSB byte of the incoming agency code must match the user-defined MSB agency code, and the LSB byte must match the internally-defined "group" response code of 0xFF.

As an example, the user-defined agency code in the ASIC might be 0x5061 with the group response code of 0xFF. In this case, for the ASIC to immediately respond, the incoming Agency code would have to be either 0x5061 or 0x50FF. Any other incoming Agency code would not cause the ASIC to respond immediately. If these conditions are not met, a microcontroller message will be generated. The microcontroller will then check its internal list of valid agency codes, and modify the ASIC's **34** user-defined agency code to that of the incoming agency code (if appropriate). After modification of the transponder's **14** user-defined agency code registers and account balance registers, the transponder **14** would be able to respond to the interrogator **12**. It is envisioned that the transponder **14** will have the issuing agency's identification programmed into its account number. It will be a lane controller or interrogator's **12** responsibility to verify the true validity of the transponder account for the given situation, and to make the proper transaction.

### Preferred message structures:

### WAKEUP structure:

Length: 10 bits
Sequence: wakeup modulation (ten manchester-encoded 1's)

### POLL structure:

Length: 10.5 bytes
Sequence: header (1.5 bytes)
record type (2 bytes)
agency code (2 bytes)
time (2 bytes)
encode key (1 byte)
CRC (2 bytes)

### RESPONSE structure:

Length: 21.5 bytes or 37.5 bytes
Sequence: header (1.5 bytes)
record type (2 bytes)
memory block A (16 bytes)
additional data (16 bytes) optional CRC (2 bytes)

### ACKNOWLEDGE structure:

Length: 19.5 bytes or 35.5 bytes
Sequence: header (1.5 bytes)
record type (2 bytes)
transponder ID (6 bytes)
reader ID (6 bytes)
status code (2 bytes)
additional data (16 bytes) optional CRC (2 bytes)

The ASIC **34** typically expects the transaction to be completed in the same cycle (i.e. during the same WAKEUP-POLL-ACKNOWLEDGE sequence). However, if the agency code "silence" period of the POLL message is still in effect, the ASIC will listen to the ACKNOWLEDGE message for a special Type 9 ACKNOWLEDGE message containing it's account number for possible turn-on.

### Example interrogator-ASIC Message Timing:

(Each Manchester-encoded bit is 3.333 us wide.)

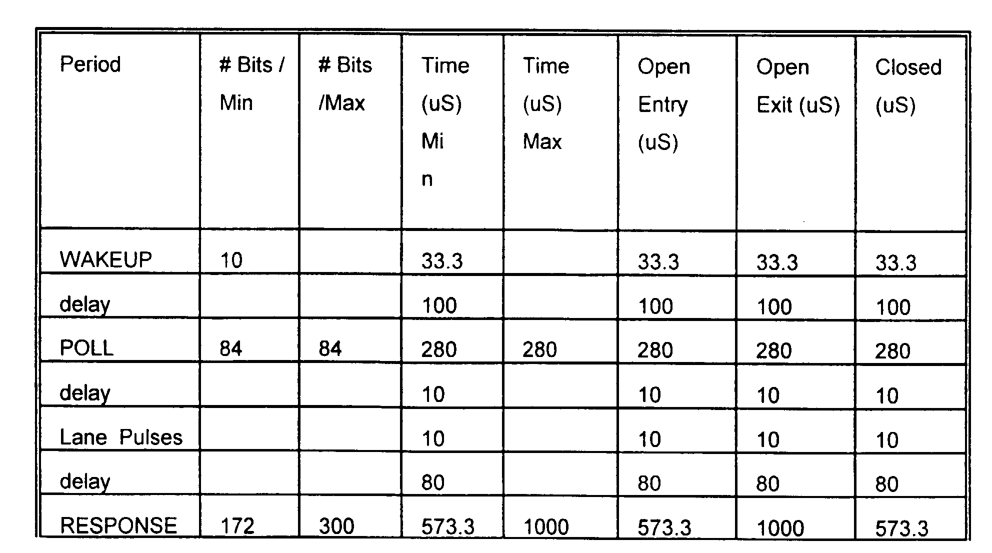

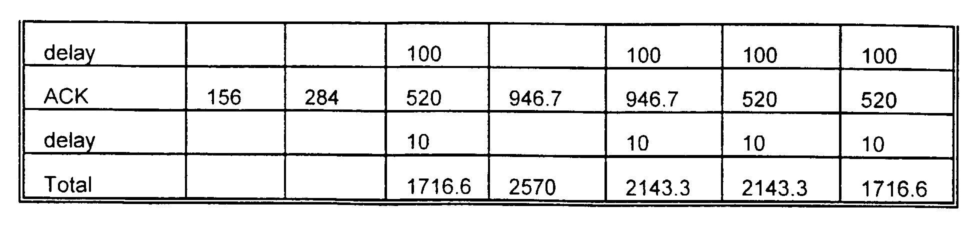

The timing described hereinabove is merely exemplary. Other timing protocols, procedures and techniques are comprehended by this specification. Various modifications and combinations of the illustrative embodiments, as well as other embodiments of the invention, will be apparent to persons skilled in the art upon reference to the description. It is therefore intended that the appended claims encompass any such modifications or embodiments.

### SPECIAL FUNCTIONS:

Power-up Reset: The digital ASIC **34** contains a power-up reset circuit to properly initialize the circuitry upon connection to a battery. An external reset pin is also provided to allow a manual reset to initiated during maintenance operations/testing. The external reset pin may be grounded to initiate a reset, and this will cause the digital ASIC **34** to lose all previously programmed data and clear all counters and registers.

Battery Consumption Gauge: The battery consumption for powerup stages 2 and 3 is measured by a special conversion/calculation circuit on the digital ASIC **34**. The battery consumption by these two stages are counted in a special register whose two high-order bits are included as part of the FLAGS register. The status of the two (MSB) bits indicate:
00: < 174 mAH used
01: 174 mAH <-> 348 mAH used
10: 348 mAH <-> 522 mAH used
11: > 522 mAH used

Buzzer Output: The preferred embodiment digital ASIC 34 has the ability to drive a piezoelectric transducer to allow audible tones to be generated in response to certain transponder functions. A high beep (1172 hz) might indicate a successful function. A low tone (586 hz) generally might indicate an unsuccessful function. A long tone is approximately 3/4 second (872 ms) long, and a short beep is approximately 1/4 second (218 ms) long, both with approximately 1/2 second (436 ms) spacing.

### Example Audio Messages:

| Situation | Sound |
|---|---|
| Successful Transaction | 3 short high beeps |
| Successful Data Load | 1 short high beep |
| Bad Account Status | 2 long low tones |
| Tollway/account mismatch | 1 long low tone |

### MAINTENANCE MODE AND MESSAGES:

A maintenance mode is provided in which the toll agency or other authorized entity can fixedly store user information into the transponder's memory. This information includes: the type of encryption; whether encryption is used; whether lane discrimination is implemented; the FSK frequencies used; in transit information about the payload, such as weight, value, or toxicity; whether a microprocessor is attached to the transponder **14**; the user account #; the amount of money stored on the transponder **14**. The transponder does not become activated until an authorized individual puts the transponder into maintenance mode at a programming station by sending an access code. The transponder or transponder **14** may provide a maintenance mode acknowledgement signal to the interrogator **12**, the maintenance mode acknowledgement signal for confirming to the interrogator that the transponder is in maintenance mode. The agency then programs the transponder with user information. A change of agency code or the expiration of the 10 second timer will cause the maintenance mode to cease.

The following functions are valid only if the maintenance mode is in effect. In maintenance mode, the lane discrimination controller **124** is disabled. The special message formats used for testing of the ASIC in maintenance mode include:

### POLL MESSAGES:

- Type 1: Maintenance POLL message
The transponder is requested to send memory blocks A and B in the next RESPONSE message.
- Type 2: Maintenance POLL message
The transponder is requested to send memory blocks A and C in the next RESPONSE message.
- Type 3: Maintenance POLL message
The transponder is requested to send memory blocks A and D in the next RESPONSE message.
- Type 4: Maintenance POLL message
The transponder is requested to send memory block A in the next RESPONSE message.
- Type 5: Maintenance POLL message
The transponder is requested to send memory block A and the maintenance block.
- Type 6: Maintenance POLL message
The battery consumption gauge clock is disconnected, the registers are loaded with test data, the registers are incremented by one clock, and the register values are read out in the RESPONSE message. The original contents must be saved, a new value calculated, and the new value stored into the battery consumption registers before the transponder is put back into operation. The transponder will respond with a Type 2 RESPONSE message.
- Type 7: Maintenance POLL message
The transponder is requested to send the entire contents of the RECEIVE buffer. This special POLL message format is used to directly load the RECEIVE buffer with test data. The transponder will respond with a Type 6 RESPONSE message, which will be unencrypted.

### RESPONSE MESSAGES:

- Type 5: Maintenance RESPONSE message
The transponder is responding with memory blocks A and the maintenance block.
- Type 6: Maintenance RESPONSE message
The transponder is responding with memory block A and the contents of the RECEIVE buffer. This message is unencrypted, and does not contain the tag's account number. The interrogator will have stored the account number of the tag from a previous POLL/RESPONSE sequence, and will use the account number in the corresponding ACK message for this response.

### ACKNOWLEDGE MESSAGES:

- Type 1: Maintenance ACKNOWLEDGE message
No operation is performed. The status code is ignored.
- Type 2: Maintenance ACKNOWLEDGE message
The message following the status code is to be loaded into memory block D. The status code is ignored.
- Type 3: Maintenance ACKNOWLEDGE message
The message following the status code is to be loaded into memory block C. The status code is ignored.
- Type 4: Maintenance ACKNOWLEDGE message
The message following the status code is to be loaded into memory block B. The status code is ignored.
- Type 5: Maintenance ACKNOWLEDGE message
The message following the status code is to be loaded into memory block A. The status code is ignored.
- Type 6: Maintenance ACKNOWLEDGE message
This indicates that the message following the status code are written into the maintenance registers. The status code is ignored.
- Type 7: Maintenance ACKNOWLEDGE message
This indicates that the status code and the message following the status code are written to the microcontroller. The status code indicates the nature of the instruction.
- Type 8: Maintenance ACKNOWLEDGE message
The bounce bit is reset. No other operation is performed. The status code is ignored.

### LOW FREQUENCY MODULATED INTERROGATOR

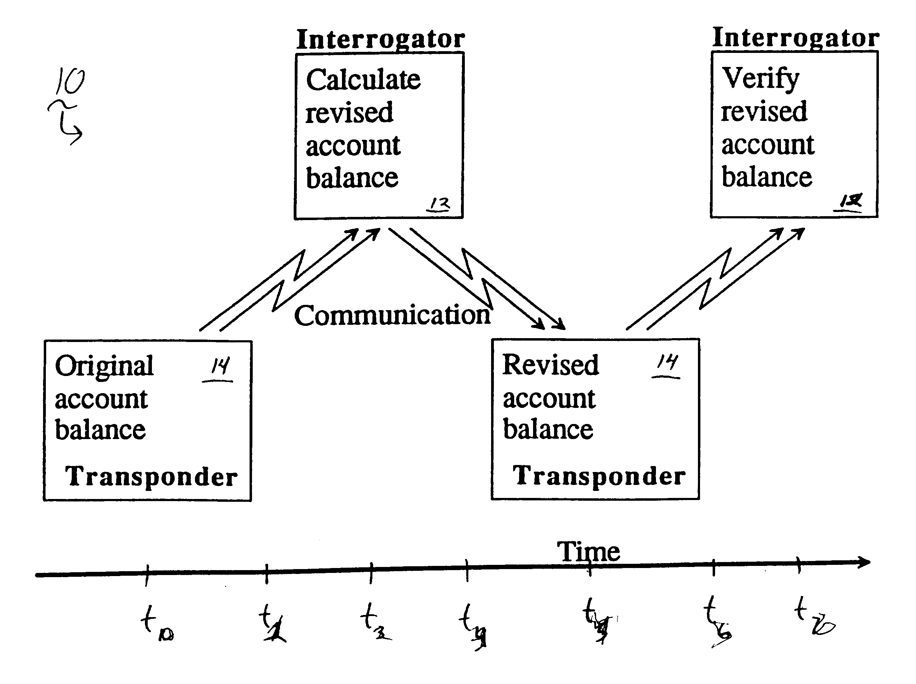

Another embodiment interrogator is shown in Figure 18. This configuration may be used to lower power consumption of the transponder by using a low frequency modulation superimposed on the normal RF interrogations. By using this low frequency modulation, it is possible to construct the field detector or wake-up circuit **64** to be sensitive to a very low modulation frequency such as 90 Hz instead of the normal communication modulation frequency. The interrogator **12** superimposes this low frequency modulation conceptually by a heterodyne or mixer **222** as shown in Figure 18. The actual superimposition of this low frequency modulation could be using post-processing of the RF interrogation signal, such as the mixer **222** as shown in Figure 18. Alternatively, the superimposition could be integrated into the generation of the RF interrogation signal, such as by using a technique called "squitter" modulation. This is a technique by which a high data rate signal can be made to contain low frequency components for signal sensing purposes. The data transmissions are thus sent in bursts having a burst rate equal to the low frequency signal to be detected. For example to achieve a 100 Hz low frequency (LF) component, data may be sent for 5 ms then remain in an known state (high or low) for another 5 ms. Then further data would be sent for another 5 ms followed by another 5 ms of "no data". Such a pattern is continuously repeated, creating a spectral line at 100 Hz that may be detected by a simple low pass filter **74** which passes 100 Hz and rejects the higher frequency signals. This squitter modulation technique would preferably be implemented in the software resident in the host **16**, the transmitter **52**, or the interface circuit **56**. Alternative transmission formats instead of the square wave gating function described above are possible. The square wave gating function has periods of "transmit" alternated with "no transmit" (such that the transmission rate modulates between 0% and 100% of the maximum). The length of the data "no transmit" period can be increased in a linear manner from a minimum period to a maximum period. This would be a triangular data rate modulation in which the burst rarte would change in time from a lower (higher) rate such as 100 hz, as described previosly, to a higher (lower) rate such as 300 hz. Such modulation would provide additional means for a receiver to recognize an interrogator signal and exclude interference sources. Other secondary modulation waveforms such as a sine wave could be utilized in this application. The motivations for using a LF modulation as the field detection signal include, as previously mentioned, a savings in power consumption. To build a sensitive field detector or wake-up circuit **64**, amplifications of the received signal must occur after detection. If the amplification is to the DC detected level, no immunity is provided to interference from external sources such as cellular phones, lightning, electric fences and other sources. Detecting a high speed modulation frequency draws a greater amount of power than might otherwise be required. The amplifier's power consumption is nearly linear with frequency, so it is important to lower the frequency the amplifier detects insofar as possible.

### ALTERNATIVE WAKE-UP FUNCTION:

An alternative wake-up method and structure will now be described with respect to Figure 19. The alternative preferred embodiment transponder will have a multi-state wake-up by which a low power stage 1 threshold detector **62** will wait for the received field strength to be greater than 500 mV/m2. Upon reception of a field strength in excess of the threshold, the stage 1 threshold detector **62** will enable the stage 2 wake-up circuit **64** to awaken and monitor the received signal for a pre-selected modulation. If the stage 2 wake-up circuit **64** receives the prescribed modulation signal, the wake-up circuit **64** will then turn on the digital ASIC **34** via switch **98**. In this manner, minimum power is consumed because the stage 1 threshold detector **62** consumes but a small amount of power although it is always in a powered condition. The wake-up circuit **64** consumes a slightly greater amount of power, but is essentially a low-power device. The wake-up circuit **64** further is only component enabled during the normally small amount of time during which the received power is greater than the threshold. Finally, if both the threshold condition and the modulation condition are satisfied, only then is power applied to the higher power consumption digital ASIC **34**. The interrogator **12** then transmits a interrogation signal to the remote transponder **14**, the interrogation signal preferably being transmitted using On-Off Keying. Upon completion of the interrogation signal, the transmitter **52** then transmits a continuous wave RF signal onto the transponder **14** so the transponder **14** may backscatter modulate the continuous wave RF signal to generate the response signal **15b**. The interrogator **12** will now be described. The interrogator **12** is located at a data exchange location such as a bridge, toll plaza, or designated point of interest. The system includes a common reference oscillator **50** which generates at its output **51** a reference carrier wave for synchronization of the interrogators **12**. Each interrogator **12** has a directional antenna **18** and a transmitter **52** which transmits a trigger signal **42** of sufficient field strength and/or modulation type at a pre-selected distance to trigger or activate a transponder **14** being carried in a vehicle **26** in the interrogator's associated vehicle lane **28a,28b,28c.** The interrogator **12** further includes a receiver **54** for reception of the response signal **15b** and for separation of the response signal **15b** from spurious non-modulated reflections. The interrogator transmitter **52** and receiver **54** operate under control of a control interface circuit **56**. The host **16** by way of the control interface circuit **56** directs the transmitter **52** to send the trigger signal **42**, followed by the interrogation signal.

### WAKE-UP BLOCK:

With reference to Figure 19, a more detailed diagram is shown of the multistate wake-up circuitry **60**. The first stage circuitry **62** and second stage wake-up circuitry **64** is preferably implemented in the analog ASIC **32**. The inventive concepts described herein have significant advantages over the prior art in terms of power consumption. It is of significant importance to design a toll tag or transponder **14** that has an exceptionally long battery life. By implementing the inventive concepts described herein, the transponder **14** will normally be in a sleep mode or STATE 1, drawing little energy from the battery **66**. The only energy consumed in this first state will be that required by the first stage circuitry **62**. First stage circuitry **62** normally comprises a DC threshold comparator **68**, which receives the signal from the antenna **30** via the detector **70**. Firstly, a detector **70** is operable to extract a 300 kbps Manchester II signal at node "A" that has been modulated onto a 915 MHz continuous wave signal. Since the first stage circuitry **62** needs only to detect a certain RF energy level, a lowpass filter **72** is provided between the detector **70** and the comparator **68**. Lowpass filter **72** outputs a DC level signal at node "B" related to the average received voltage level at node "A." Since the DC threshold comparator **68** is in an essentially static condition, the power consumed thereby is very low. When the DC level signal at node "B" exceeds a certain pre-determined voltage threshold, the comparator **68** by its output at node "C" enables the wake-up **64** to monitor the received signal for the presence of the 300 kbps modulation and the transponder **14** thus enters STATE 2.

With further reference to Fig. 19, a high pass filter **74** is provided at the output of the detector **70** to filter out any spurious low frequency signals such as that from cellular phones or other sources. The high pass filtered signal is provided from the filter **74** at node "D." The filter **74** may alternatively be a band pass filter. Upon detection of an RF field of sufficient strength, the comparator **68** enables the oscillator or pulse generator **76** and a modulation detector **78**, which is preferably a pulse counter. The wake-up circuitry **60** supplies power to the digital ASIC **34** to enter STATE 3 only upon detection of a sufficient RF signal energy and a modulation at a pre-determined frequency in order to maintain the minimum power consumption. In a first preferred embodiment, the expected modulation frequency will be the high-speed modulation of 248 KHz or more. In another preferred embodiment, a low frequency signal of approximately 90 Hz is superimposed upon the 915 MHz carrier.

Still referring to Fig. 19, the demodulated signal from the transponder detector **70** becomes one input of the analog voltage comparator **68** called the signal level flag. The threshold level is determined by a 3 bit DAC (not shown). A pulse generator **76**, preferably a crystal oscillator, RC oscillator, or ceramic resonator is enabled and a pulse counter **78** is loaded with a count corresponding to a pre-determined duration. Each pulse of RF signal level raising the voltage at node "B" over the threshold causes the pulse counter **78** to be re-started, keeping the pulse generator **76** running until the pre-determined duration has expired. The pre-determined duration of the pulse counter is selected based upon the time between RF interrogation pulses from the interrogator **12**. For example, an interrogator may send RF interrogation pulses every 2 ms, and the short absences of signal due to any On-Off Keying (OOK) of the carrier or other short, intra-message absences will be typically much less than 2 ms. Thus, the pre-determined duration will be slightly less than 2 ms but greater than the intra-message absences in order to keep the digital ASIC **34** enabled for an entire message from the interrogator.

As mentioned, the signal level flag from the comparator **68** activates the wake-up circuit **64**. For the first preferred embodiment the pulse counter **78** is preferably a gated 4 bit counter circuit. The gate is set at 62.5 us, meaning that the 4 bit counter overflows if a 248 kHz or greater modulation is present. To further save power, the wake-up circuit **64** has its power duty-cycled. Every 16 ms, a 2 ms window is opened (1/8 duty cycle), and within the 2 ms window the detector is on for 62.5 us and off for 125 us (1/3 duty cycle). This duty-cycling (1/8 x 1/3 = 1/24 duty cycle) effectively reduces the power consumption to 1/24th of the original value.

Still referring to Fig. 19, if no modulation is detected and the RF signal drops below the threshold voltage, the wakeup block **60** will automatically power down a short time later. If no wakeup modulation is detected and the RF signal maintains above the threshold, the wake-up circuit **64** will preferably continue to consume power. If modulation is detected, the majority of the digital ASIC **34** is activated and the pulse counter **78** is kept active by a signal from the main controller block **80** (see Fig. 11) of the digital ASIC **34**. If the RF signal disappears, the main controller block **80** may keep the pulse generator **76** active until the digital ASIC **34** functions are completed. The main controller **80** will not stop the pulse generator **76** until all pending functions are completed. The pulse generator **76** would preferably stop a short time after the main controller **80** signaled a power-down. Preferably, the transponder **14** will now enter a STATE 4 wherein all circuitry is essentially dormant for a fixed period of time so that the transponder **14** will not be again activated by the same modulation. After this fixed period of time, the transponder **14** again enters STATE 1 so that it is able to receive interrogation signals from other interrogators **10**.

Fig. 20 is a representation of the time sequence and location of the calculation of user account balances for an embodiment of the present invention. The times (t₀, t₁, t₂, ...) are given as reference points along the time axis are provided merely for convenience in describing the functions performed and their relative order. No measurable units are intended thereby. In an embodiment of the invention, a transponder **14** will approach an interrogator **12** at time t₀. At time t₀, the user account balance is preferably stored in the transponder's main memory block **148** along with a transponder identification number, and a "vehicle entry point" stored in the transponder corresponding to the location at which the transponder entered the toll system. The transponder's user account balance is transmitted at time t₁ from the transponder **14** to the interrogator **12**. At time t₂, the interrogator **12** computes a revised account balance using, for example, the original user account balance, the entry point or other distance information stored or calculated in the transponder **14**, and toll information and/or balance equations stored in the interrogator **12** for determining the amount of the toll to be subtracted from the original user account balance. The exemplary equations or algorithms could comprehend a flat toll, or a toll based on other variables, such as the time of day, traffic density, or characteristics of the vehicle (or occupant) that might also be transmitted from the transponder **14** to the interrogator **12**. For example, an algorithm or balance equation could charge one toll for a vehicle carrying a single commuter and another, lesser toll, for a vehicle carrying carpoolers. The interrogator **12** could determine whether the vehicle carried more than one commuter by identifying multiple transponders within the vehicle, or by identifying a specially designated transponder **14** by a special code contained therein. The interrogator **12** might use the control circuit **56**, the host **16**, or other circuitry to calculate the revised user account balance. Preferably, the control circuit **56** might be operable to compute the revised user account balance so the interrogator **12** achieves maximum autonomy. At time t₃, the interrogator **12** would then preferably transmit the revised user account balance to the transponder **14**.

Still referring to Fig. 20, the transponder at time t₄ now preferably has stored in its main memory block **148** the revised user account balance. At this stage, sufficient data communication has taken place to properly credit or debit the user account balance. This revised user account balance might reside solely within the transponder main memory block **148**, or the interrogator **12** might maintain a copy of the revised user account balance for data integrity checking to be described hereinbelow. A first level of data integrity checking could be initiated at time t₅. At this time, the transponder **14** preferably would transmit the revised user account balance, as stored in its main memory block **148**, to the interrogator **12**. The interrogator **12** would preferably comprise a memory integral to the control circuit **56** for the storage of temporary data such as the calculated revised user account balance for this comparison to the revised user account balance received from the transponder **14**. The interrogator **12** at time t₆ would then verify that the revised user account balance as held in the interrogator **12** matches that transmitted by the transponder **14** back to the interrogator **12**. Generally, if the value of the calculated revised user account balance did not equal that received from the transponder **14**, the interrogator **12** would institute retry/retransmit algorithms until the transmission is successful and the two values match. A second level of data integrity could be used for account checking after time t₆. Completing this second level of data integrity is not shown in Fig. 20, but generally might be accomplished by transmitting the revised user account balance from the interrogator **12** to a host computer **16**. The above methods for ensuring data integrity might complement or replace the CRC error checking as prior described in this specification.

Although generally this system and method has been described with respect to debiting tolls from a user account balance, the current invention appreciates that credits fur transport services or other credits could also be made to the user account balance. Indeed, a system may choose to credit or debit a given account based on characteristics of the vehicle as transmitted from the transponder **14** to the interrogator **12**. The characteristics of the vehicle used for determining the amount of credit or debit to be applied to the user account balance could also be detected by means external to the transponder/interrogator **14,12** communication link.

Additional capabilities envisioned include, but are not limited to, EEPROM memory, LCD drive capability with push button selection, serial communications, and piezoelectric buzzer drive.

The sole table below comprises the terms used in this patent application, including some alternate and preferred terms. Other terms may be used which are not listed in the sole table.

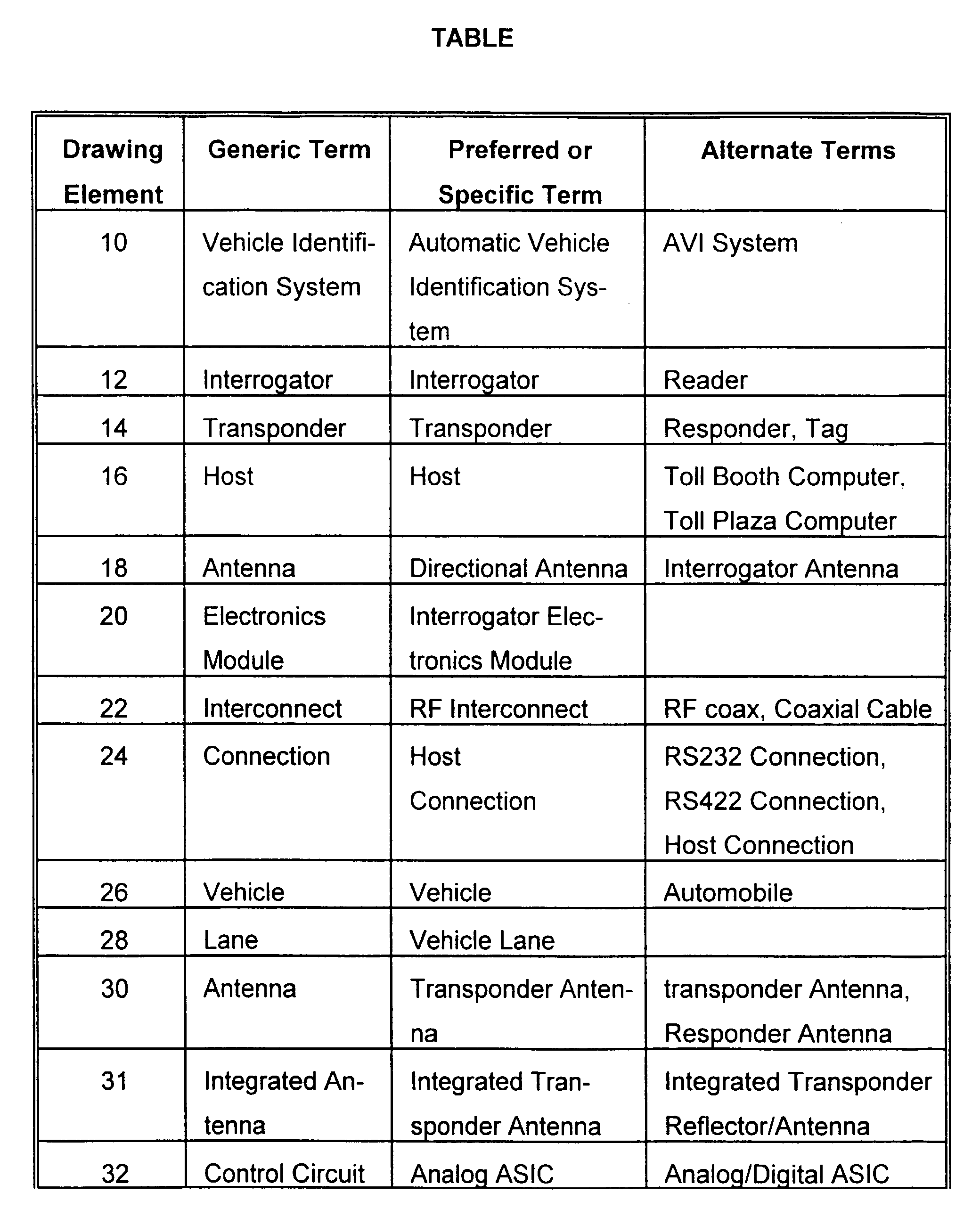

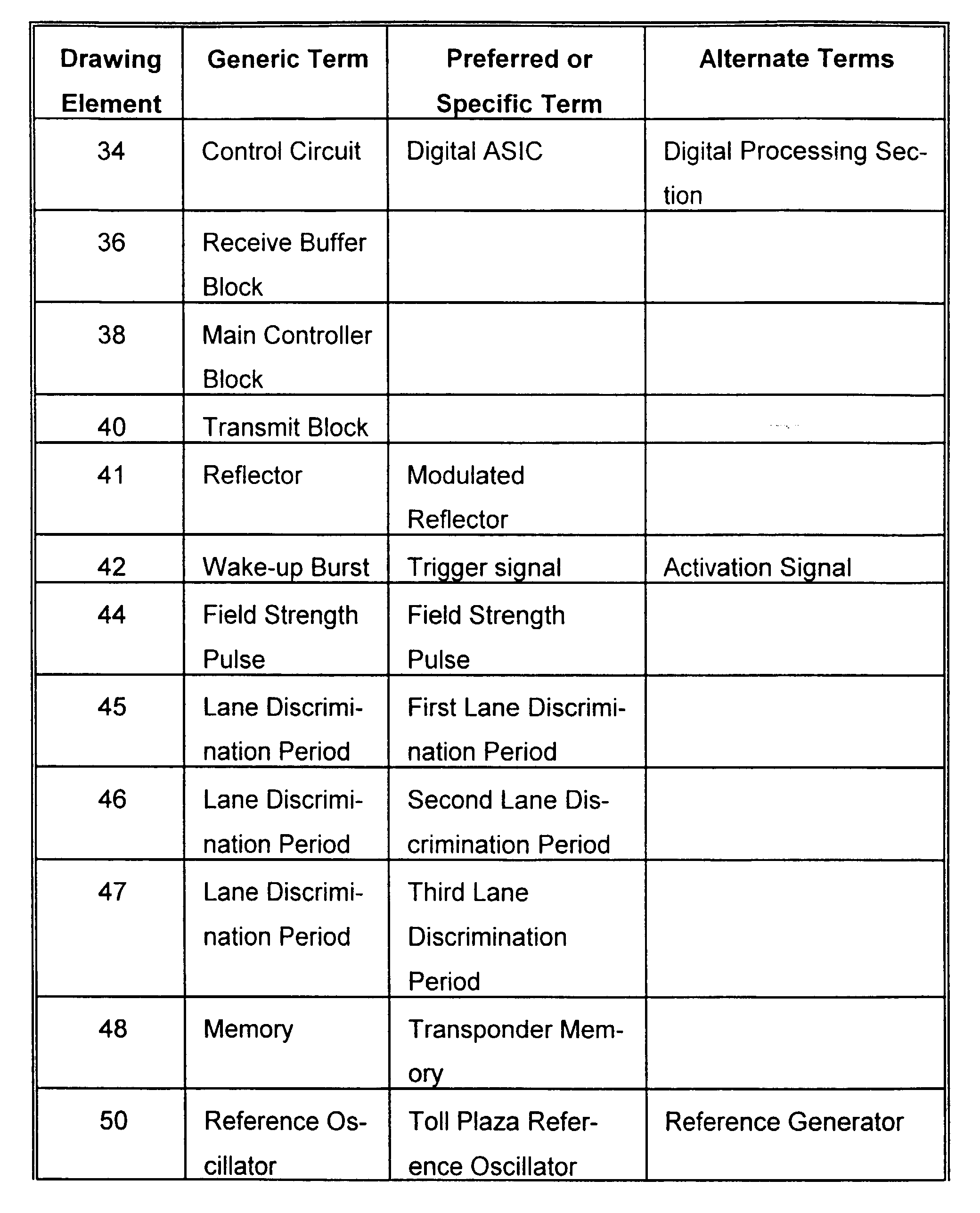

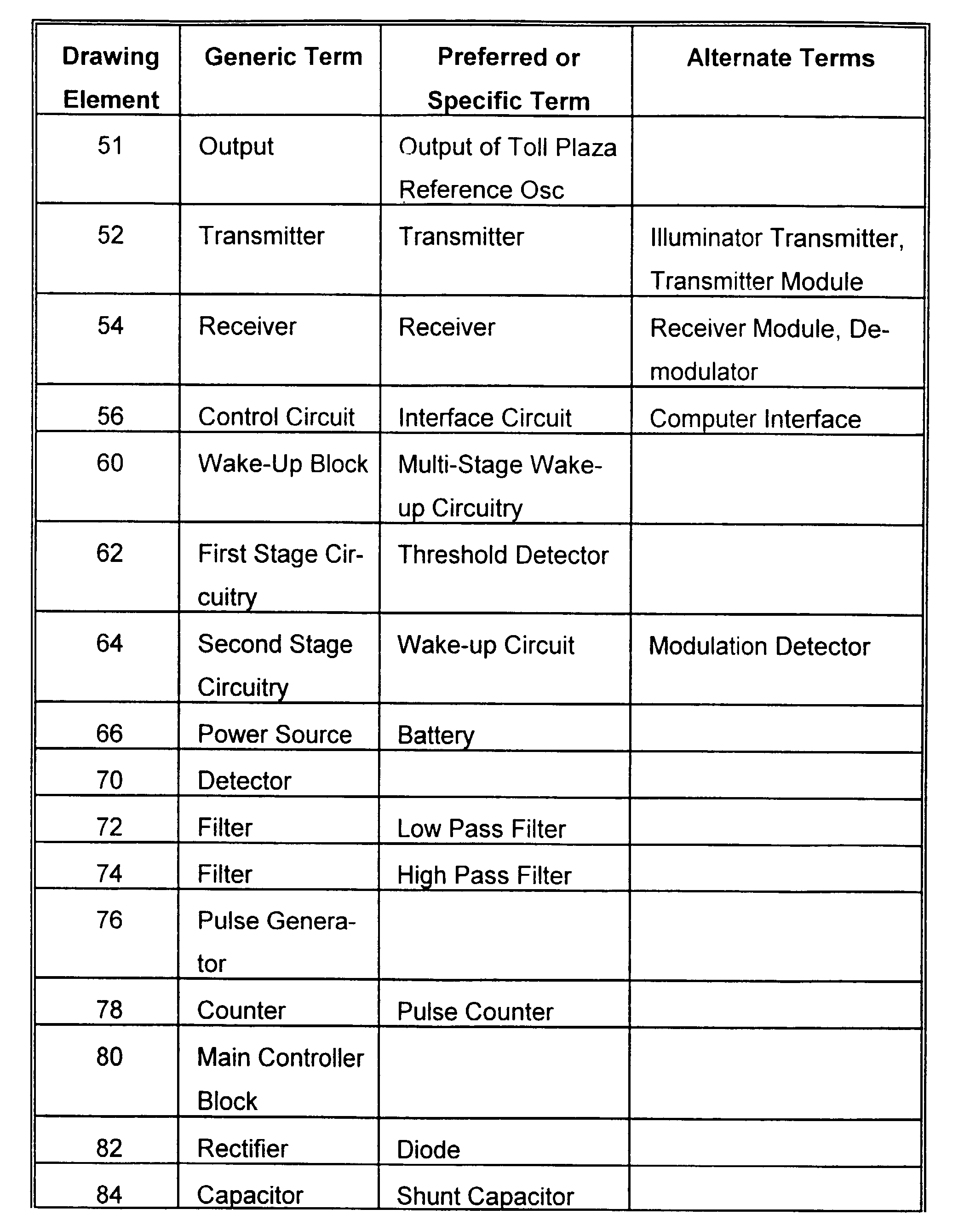

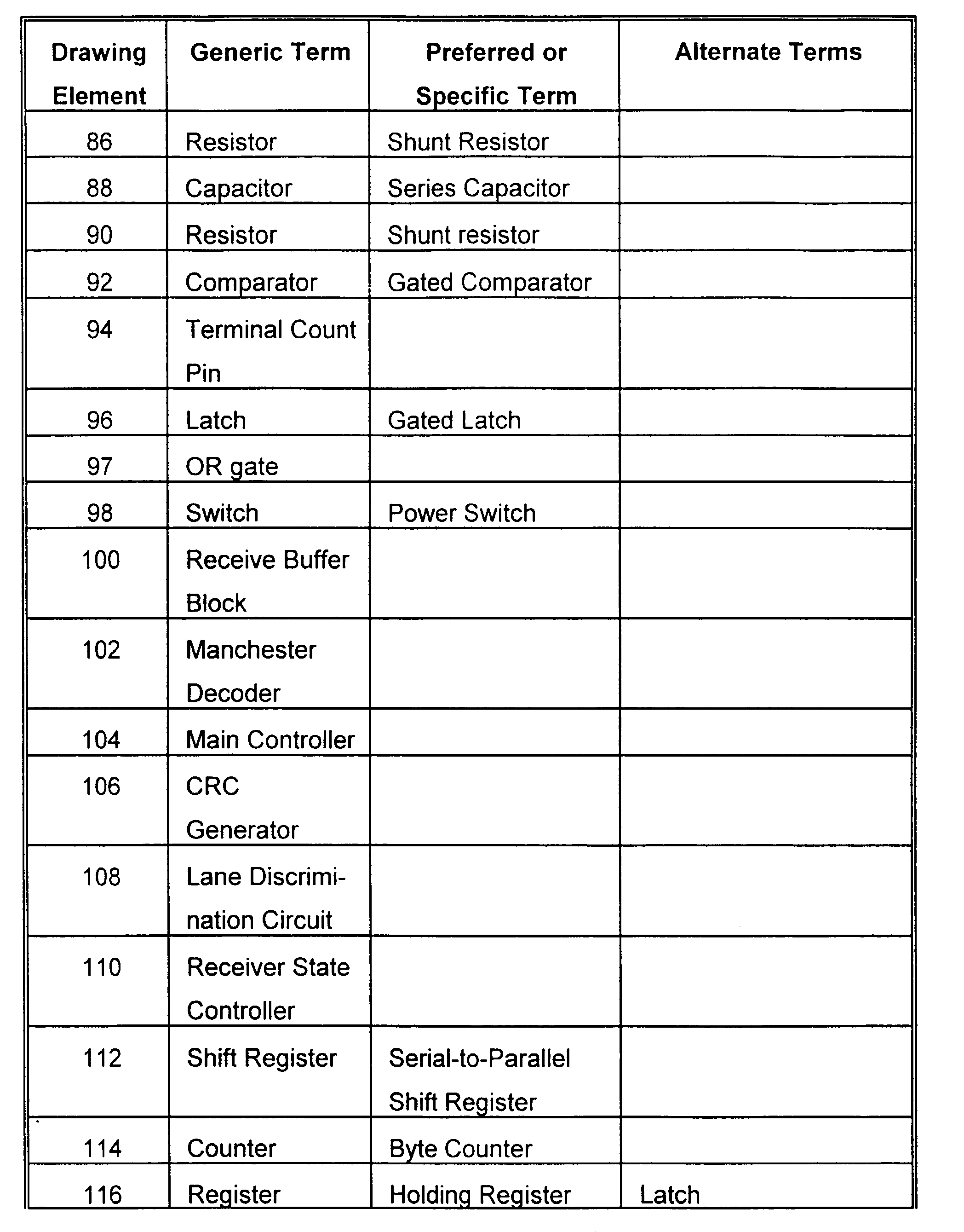

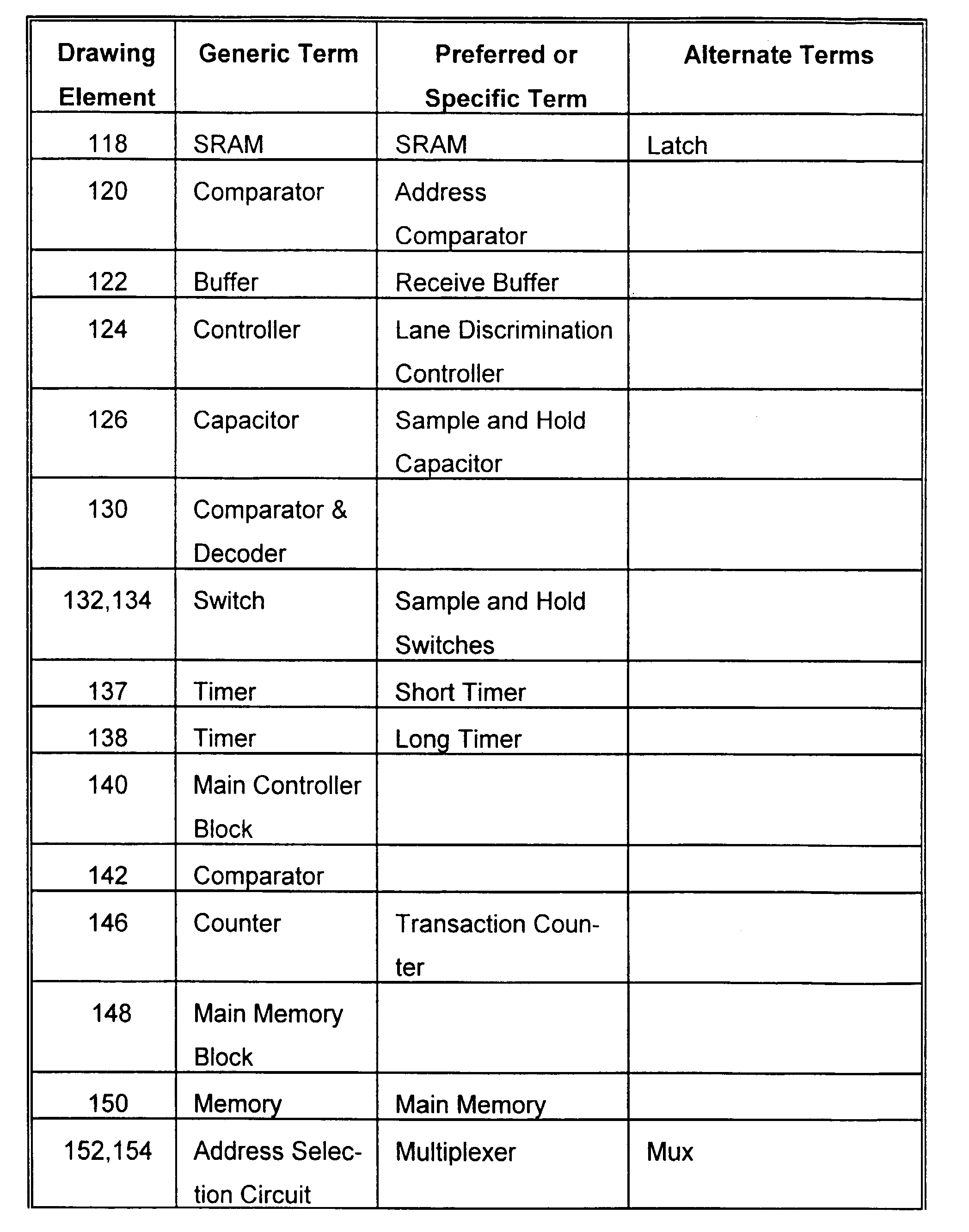

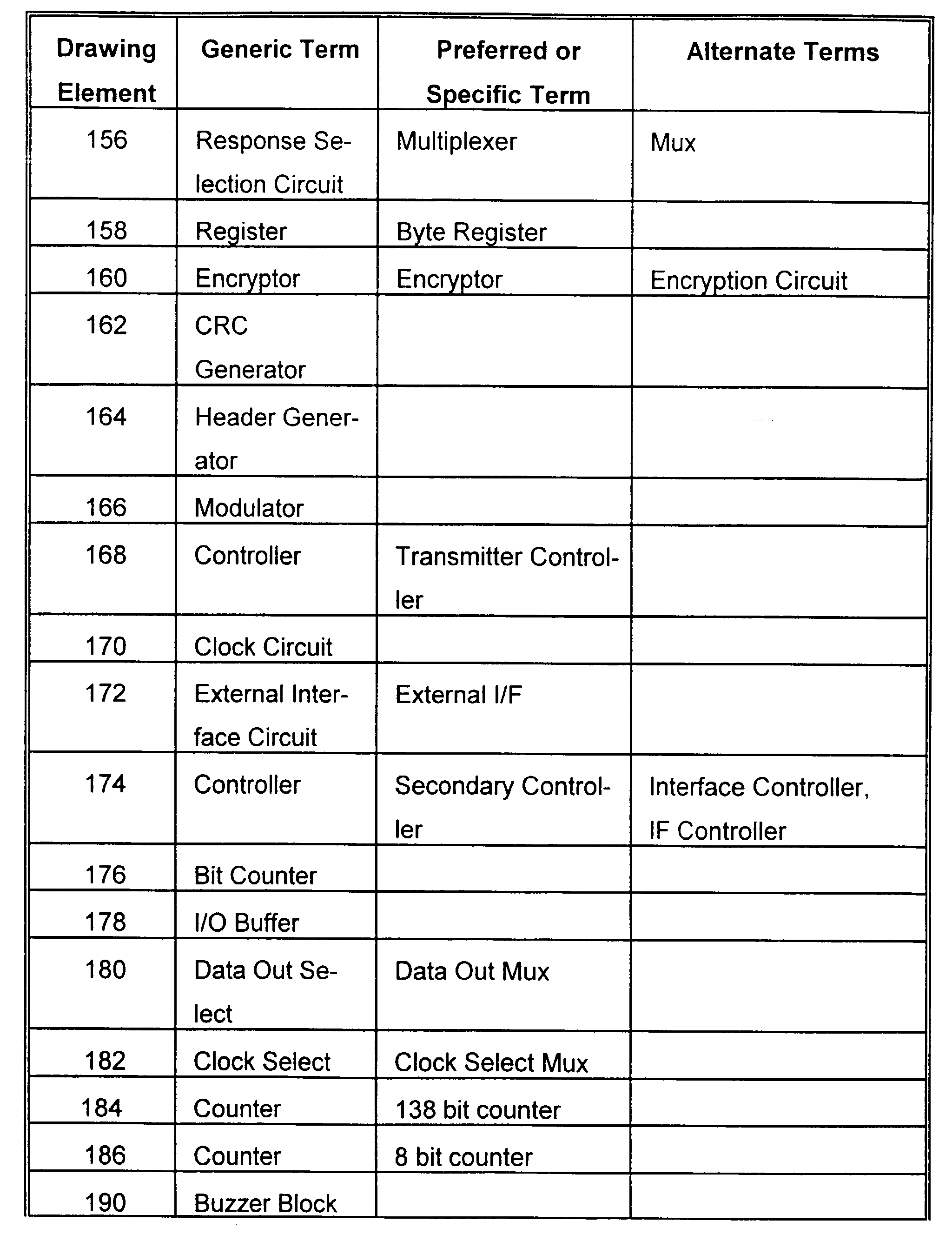

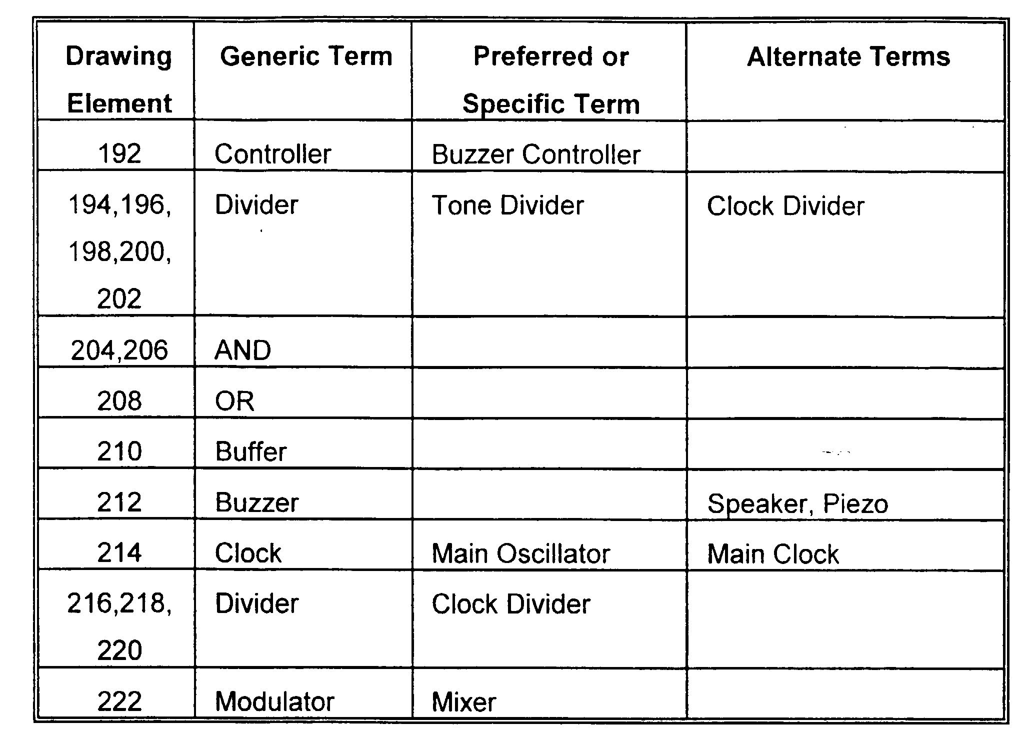

A few preferred embodiments have been described in detail hereinabove. It is to be understood that the scope of the invention also comprehends embodiments different from those described, yet within the scope of the claims.

For example, display devices can be cathode ray tubes or other raster-scanned devices, liquid crystal displays, or plasma displays. "Microcomputer" in some contexts is used to mean that microcomputer requires a memory and "microprocessor" does not. The usage herein is that these terms can also be synonymous and refer to equivalent things. The terms "controller," "processing circuitry," and "control circuitry" comprehend ASICs (application specific integrated circuits), PAL (programmable array logic), PLAs (programmable logic arrays), decoders, memories, non-software based processors, or other circuitry, or digital computers including microprocessors and microcomputers of any architecture, or combinations thereof. Memory devices include SRAM (static random access memory), DRAM (dynamic random access memory), pseudo-static RAM, latches, EEPROM (electrically-erasable programmable read-only memory), EPROM (erasable programmable read-only memory), registers, or any other memory device known in the art. Words of inclusion are to be interpreted as nonexhaustive in considering the scope of the invention.

Frequency shift keyed (FSK) modulation is envisioned as a possible data modulation scheme, as well as pulse-pause modulation, amplitude shift keying (ASK), quadrature AM (QAM) modulation, quadrature phase shift keying (QPSK), or any other modulation. Different types of multiplexing such as time or frequency modulation might be effected to avoid cross-signal interference. Modulation might be effected by back-scatter modulation, by active modulation of a carrier, or by another method. Discrete components or fully integrated circuits in silicon (Si), gallium arsenide (GaAs), or other electronic materials families, as well as in optical-based or other technology-based forms and embodiments might be used to implement the circuits described herein. It should be understood that various embodiments of the invention can employ or be embodied in hardware, software or microcoded firmware.

Implementation is contemplated in discrete components or fully integrated circuits in silicon, gallium arsenide, or other electronic materials families, as well as in optical-based or other technology-based forms and embodiments. It should be understood that various embodiments of the invention can employ or be embodied in hardware, software or microcoded firmware.

While this invention has been described with reference to illustrative embodiments, this description is not intended to be construed in a limiting sense. Various modifications and combinations of the illustrative embodiments, as well as other embodiments of the invention, will be apparent to persons skilled in the art upon reference to the description. It is therefore intended that the appended claims encompass any such modifications or embodiments.

## Claims

1. A method of calculating a revised user account balance in a recognition system comprising a transponder in wireless electrical communication with an interrogator, the method comprising the steps of:
a) transmitting from said transponder to said interrogator a user account balance;
b) receiving in said interrogator said user account balance;
c) calculating in said interrogator said revised user account balance, a factor in said calculation being said user account balance;
d) transmitting from said interrogator to said transponder said revised user account balance; and
e) receiving in said transponder said transmission from said interrogator.

2. The method of claim 1 and further comprising the step of transmitting from said transponder to said interrogator a verification user account balance comprising a user account balance derived from said transmission from said interrogator.

3. The method of claim 2 and further comprising the steps of receiving in said interrogator said verification user account balance and of comparing said verification user account balance to the revised user account balance so that the interrogator may verify that the revised user account balance was properly received in said transponder.

4. The method of claim 3 and further comprising the step of retransmitting from said transponder to said interrogator said user account balance if the verification user account balance does not equal the revised user account balance.

5. The method of claim 1 wherein said revised user account balance is calculated by debiting an amount from said user account balance.

6. The method of claim 1 wherein said recognition system is an automatic vehicle identification (AVI) system.

7. The method of claim 6 wherein said AVI system is a toll collection system.

8. The method of claim 1 and further comprising the step of entering a transponder maintenance mode prior to said step of transmitting from said interrogator to said transponder said revised user account balance.

9. The method of claim 8 wherein said step of entering said transponder maintenance mode further comprises the step of sending an access code from said interrogator to said transponder, said access code giving said interrogator access to restricted addresses within a transponder memory.

10. The method of claim 1 wherein the user account balance is stored in said transponder in an encrypted form.

11. The method of claim 10 wherein said interrogator decrypts said user account balance prior to calculating said revised user account balance.

12. The method of claim 1 wherein said interrogator encrypts said revised user account balance prior to transmitting said revised user account balance to said transponder.

13. A method of calculating a revised user account balance in a recognition system, the method comprising the steps of:
a) transmitting from said transponder to said interrogator a user account balance;
b) receiving in said interrogator said user account balance;
c) calculating in said interrogator said revised user account balance, said revised user account balance being the user account balance less the toll to be charged to the particular vehicle at the particular toll area;
d) transmitting from said interrogator to said transponder said revised user account balance;
e) receiving in said transponder said transmission from said interrogator;
f) transmitting from said transponder to said interrogator a verification user account balance derived from said transmission from said interrogator; and
g) comparing said verification user account balance to the revised user account balance so that the interrogator may verify that the revised user account balance was properly received in said transponder.

14. The method of claim 13 and further comprising the step of repeating at least one of the steps recited therein if the verification user account balance does not equal the revised user account balance.

15. An interrogator for a recognition system, said interrogator comprising:
a) a receiver for receiving a user account balance from a transponder;
b) a transmitter for transmitting a revised user account balance to said transponder; and
c) a control circuit for calculating a revised user account balance, a factor in said calculation being said user account balance.

16. The interrogator of claim 15, said interrogator further comprising a memory for receiving from said transponder a transmission comprising a verification user account balance and further operable to compare said verification user account balance to said revised user account balance received in the transmission from said transponder.

17. The interrogator of claim 15 wherein said control circuit is operable to compare said revised user account balance and the revised user account balance received in the transmission from said transponder.

18. A recognition system, said recognition system comprising:
a) a transponder, said transponder having a memory for maintaining user account balances, a transmitter in electrical communication with said memory, said transmitter for transmitting an original user account balance, and a receiver in electrical communication with said memory for receiving a revised user account balance;
b) an interrogator, said interrogator having a receiver for receiving said original user account balance, a control circuit in electrical communication with said receiver for computing a revised user account balance, said computation using said original user account balance as a factor, and a transmitter in electrical communication with said control circuit for transmitting said revised user account balance to said transponder.

19. The recognition system of claim 18 wherein said interrogator receiver is further operable to receive from said transponder a data transmission comprising a verification user account balance and wherein said interrogator control circuit is further operable to compare said verification user account balance to said revised user account balance.
